# EUROPÄISCHE PATENTSCHRIFT

(11) **EP 4 648 994 B1**
(45) Veröffentlichungstag und Bekanntmachung des Hinweises auf die Patenterteilung: **02.12.2026**
(21) Anmeldenummer: 24700043.3
(22) Anmeldetag: 02.01.2024
(51) Int. Cl.: B60W 30/02, B60W 40/10, B60W 50/00

(54) **VERFAHREN ZUM STEUERN EINES FAHRZEUGS**
METHODE FOR CONTROLLING A VEHICLE
PROCÉDÉ DE CONTRÔLE D'UN VÉHICULE

(30) Priorität: 13.01.2023 DE 102023100747
(43) Veröffentlichungstag der Anmeldung: 19.11.2025
(73) Patentinhaber: ZF CV Systems Global GmbH, 3006 Bern (CH)
(72) Erfinder: BIEBER, Benjamin, 30900 Wedemark (DE); BÖTTCHER, Jonas, 30455 Hannover (DE); PLÄHN, Klaus, 30926 Seelze (DE); WULF, Oliver, 31535 Neustadt (DE)
(74) Vertreter: Rabe, Dirk-Heinrich
(86) Internationale Anmeldenummer: PCT/EP2024/050031
(87) Internationale Veröffentlichungsnummer: WO 2024/149632

(56) Entgegenhaltungen:
- EP-B1- 1 399 344
- US-A1- 2022 111 834
- US-B2- 11 458 956

## Beschreibung

Die Erfindung betrifft ein Verfahren zum Steuern eines Fahrzeugs in einer Fahrsituation. Ferner betrifft die Erfindung ein Fahrerassistenzsystem, ein Fahrzeug und ein Computerprogrammprodukt.

Ein erfahrener Berufskraftfahrer kann bereits aufgrund seiner Erfahrung beurteilen, ob sich ein Fahrzeug stabilitätskritisch verhalten wird. Die von einem geübten Fahrer gewählte Fahrweise ist den gegebenen Randbedingungen anpasst und ermöglicht ein sicheres Steuern des Fahrzeugs. Die zu einer korrekten Beurteilung der gegenwärtigen Situation benötigte Erfahrung, stellt sich allerdings in der Regel erst nach mehreren Praxisjahren ein. Aufgrund dieser Erfahrung schätzt ein geübter Fahrer das Fahrzeugverhalten korrekt ein und steuert das Fahrzeug in einer vorliegenden Fahrsituation sicher.

Ein unerfahrener Fahrer kann hingegen eine korrekte Beurteilung des zu erwartenden Fahrzeugverhaltens nicht oder nur teilweise vornehmen. Auch sogenannte virtuelle Fahrer, die autonome Fahrzeuge steuern oder Teilaufgaben beim Steuern autonomer oder teilautonomer Fahrzeuge übernehmen, können eine korrekte Beurteilung des Stabilitätsverhaltens bisher nicht gewährleisten. Dies birgt das Risiko einer der gegenwärtigen Fahrzeugkonfiguration unangemessenen Fahrweise und in der Folge auch einer erhöhten Unfallgefahr.

Bekannte Stabilitätsregelsysteme stabilisieren Fahrzeuge ausschließlich reaktiv, wenn das Fahrzeug einen als stabil bewerteten Bewegungszustand bereits deutlich verlassen hat. Ein Stabilitätsregelsystem, wie insbesondere eine sogenannte Electronic Stability Control (ESC), greift erst dann stabilisierend in eine Bewegung des Fahrzeugs ein, wenn eine Eingriffsschwelle überschritten ist. Diese Eingriffsschwelle ist aus Sicherheitsgründen hoch gewählt, um Fehleingriffe des Stabilitätsregelsystems sicher zu vermeiden. So löst ein ESC meist erst dann aus, wenn ein Fahrer (menschlich oder virtuell) des Fahrzeugs eine Instabilität bemerkt und diese durch ruckartige Lenkbewegungen auszugleichen versucht. Herkömmliche Stabilitätsregelsysteme haben daher den Nachteil, dass der Fahrer nur unzureichend beim Lösen einer für die Fahrsituation zu erfüllenden Fahraufgabe unterstützt wird, die meist darin besteht, das Fahrzeug entlang eines bestimmten Pfads (Sollpfad) zu führen. Im Vergleich zu einer stabilen Fahrt wird in Folge des späten Eingreifens eines herkömmlichen Stabilitätsregelsystems erheblich mehr Platz benötigt wird. Zwar regeln herkömmliche Stabilitätsregelsysteme Instabilitäten in der Regel zuverlässig aus, es kommt jedoch üblicherweise zu erheblichen Abweichungen des Fahrzeugs von dem geplanten Pfad. Hieraus resultiert ein erhebliches Sicherheitsrisiko, insbesondere auch dann, wenn ein ungeübter Fahrer eine Instabilität erst spät erkennt, in der Folge spät versucht die Instabilität auszugleichen und so das Stabilitätsregelsystem erst verspätet auslöst.

Die US2022111834A1 betrifft eine Vorrichtung und Verfahren zur Steuerung des Fahrens eines Fahrzeugs, umfassend eine Kamera, die konfiguriert ist, um ein Bild vor einem Fahrzeug zu erfassen, einem Sensor, der dazu ausgelegt ist, eine Fahrgeschwindigkeit des Fahrzeugs zu erfassen, ein erstes neuronales Netzwerk, das konfiguriert ist, um einen Kompensations-Lenkwinkel basierend auf einem Vergleich eines Fahrlenkwinkels mit einem berechneten Lenkwinkel zu berechnen, und ein zweites neuronales Netzwerk, das konfiguriert ist, um eine Geschwindigkeit des Fahrzeugs basierend auf dem Vergleichen des Kompensations-Lenkwinkels mit einem Schwellenwert einzustellen, wobei der Fahrlenkwinkel Lenkwinkelinformation umfasst, die während der Fahrt des Fahrzeugs gesammelt wird, und der berechnete Lenkwinkel eine Lenkwinkelinformation umfasst, die durch Empfangen des Bildes und der Fahrgeschwindigkeit erlernt wurde.

Es besteht daher der Bedarf nach Verfahren zum Steuern eines Fahrzeugs, nach Fahrzeugsteuersystem, Fahrzeugen und/oder nach Computerprogrammprodukten, die ein Früherkennen von Instabilitäten ermöglichen, die vorzugsweise kostengünstig realisierbar sind und/oder eine verbesserte Sicherheit bieten.

In einem ersten Aspekt löst die Erfindung die Aufgabe mittels eines Verfahrens zum Steuern eines Fahrzeugs in einer Fahrsituation, aufweisend: Ermitteln einer Trajektorie des Fahrzeugs für die Fahrsituation; Ermitteln eines Soll-Lenkwinkels basierend auf der Trajektorie; Ermitteln eines Ist-Lenkwinkels des Fahrzeugs in der Fahrsituation; Ermitteln einer Lenkwinkelabweichung zwischen dem ermittelten Soll-Lenkwinkel und dem ermittelten Ist-Lenkwinkel; Bereitstellen eines Lenkwinkeltoleranzwerts für die Lenkwinkelabweichung; Früherkennen einer Instabilität des Fahrzeugs, falls die ermittelte Lenkwinkelabweichung den Lenkwinkeltoleranzwert verletzt; und in Antwort auf das Früherkennen einer Instabilität des Fahrzeugs: Ausführen zumindest eines Fahrdynamikeingriffs unter Verwendung zumindest eines Fahrzeugaktuators des Fahrzeugs, um der Instabilität des Fahrzeugs entgegenzuwirken.

Der Erfindung liegt die Erkenntnis zugrunde, dass der in der Fahrsituation tatsächlich vorliegende Ist-Lenkwinkel bei Vorliegen einer Instabilität von einem Soll-Lenkwinkel abweicht. Die Erfindung macht sich diese Erkenntnis zunutze, indem eine Instabilität des Fahrzeugs unter Verwendung zumindest der Lenkwinkelabweichung erkannt wird. Der Ist-Lenkwinkel kann in der Fahrsituation einfach ermittelt werden. So ermitteln herkömmliche Fahrzeugregelsysteme, die heute in nahezu allen Fahrzeugen vorgesehen sind, den Lenkwinkel meist ohnehin. Das Ermitteln des Lenkwinkels kann daher im Verfahren besonders einfach basierend auf Signalen und/oder Messgrößen erfolgen, die bereits am Fahrzeug verfügbar sind. Das Verfahren kann besonders einfach implementiert werden. Die Fahrsituation ist vorzugsweise eine Situation in der sich eine Querdynamik des Fahrzeugs ändert, also beispielsweise eine Kurvenfahrt oder ein Ausweichmanöver. Die Fahrsituation kann aber auch eine Geradeausfahrt des Fahrzeugs umfassen, wobei dann der Ist-Lenkwinkel und der Soll-Lenkwinkel in der Regel gleich null sind und die Lenkwinkelabweichung ebenfalls gleich null ist.

Die Trajektorie umfasst zumindest einen geplanten Pfad (Sollpfad), der von dem Fahrzeug zum Erfüllen der Fahraufgabe zu befahren ist. Die Trajektorie umfasst vorzugsweise den von dem Fahrzeug in einem nächsten Berechnungsintervall der Trajektorie zu befahrenden Pfad. Dies kann vorzugsweise der von dem Fahrzeug in den nächsten Sekunden zu befahrenden Pfad sein. Die Trajektorie ist also bevorzugt keine Route zum Lösen einer gesamten Fahraufgabe des Fahrzeugs. Beispielsweise umfasst die Trajektorie für eine Kurvenfahrt zumindest eine Bahnkurve, entlang derer das Fahrzeug die Kurve durchfahren soll. Ferner umfasst die Trajektorie vorzugsweise eine fahrdynamische Vorgabe. Diese fahrdynamische Vorgabe ist oder umfasst vorzugsweise eine zum Befahren des Pfads vorgegebene Geschwindigkeit oder einen vorgegebenen Geschwindigkeitsverlauf. Die Trajektorie wird vor der eigentlichen Fahrsituation für die Fahrsituation geplant, beschreibt also vorzugsweise ein Soll-Wert der Fahrzeugbewegung für die Fahrsituation. Die Trajektorie wird bevorzugt von einer voll- oder teilautonomen Einheit, wie einer automatischen Distanzregelung oder einer autonomen Steuereinheit, die auch als virtueller Fahrer bezeichnet wird, ermittelt. Die Fahrsituation ist kein diskreter Zeitpunkt, sondern ein Zeitabschnitt. Die Fahrsituation umfasst zumindest einen Zeitabschnitt, der benötigt wird, um durch Einstellen eines Lenkwinkel-Istwerts eine Wirkung auf die Fahrzeugposition zu erzielen.

Der Soll-Lenkwinkel wird basierend auf der Trajektorie ermittelt. Der Soll-Lenkwinkel ist ein Prognosewert des Lenkwinkels für die Trajektorie, also ein Lenkwinkel, der gemäß einer Prognose an dem Fahrzeug ausgesteuert werden muss, um das Fahrzeug entlang der Trajektorie zu führen. Vorzugsweise erfolgt das Ermitteln des Soll-Lenkwinkels unter Verwendung zumindest einer geometrischen Charakteristik. Das Verfahren kann hierzu ein Ermitteln zumindest einer geometrischen Charakteristik des Fahrzeugs umfassen. Die geometrische Charakteristik repräsentiert zumindest teilweise eine Geometrie des Fahrzeugs. Neben oder anstelle von geometrischen Abmessungen kann die zumindest eine geometrische Charakteristik vorzugsweise auch Mengenangaben (beispielsweise eine Anzahl der Achsen des Fahrzeugs) enthalten. Die geometrische Charakteristik ist insbesondere eine die Fahrdynamik des Fahrzeugs definierende Geometriegröße, wie vorzugsweise ein Radstand des Fahrzeugs, ein Achsabstand zwischen Achsen des Fahrzeugs, eine Spurbreite des Fahrzeugs, ein Abstand zwischen einer Hinterachse des Fahrzeugs und einem Kupplungspunkt eines Anhängers und/oder eine Konstruktionsform eines Anhängerfahrzeugs (beispielsweise Deichselanhänger oder Zentralachsanhänger). Auch eine Konstruktionsform des Anhängerfahrzeugs kann mittels einer geometrischen Charakteristika berücksichtigt bzw. repräsentiert werden. Vorzugsweise wird der Soll-Lenkwinkel unter Verwendung der Trajektorie und der zumindest einen geometrischen Charakteristik unter Verwendung eines Fahrzeugmodells ermittelt. Das Fahrzeugmodell kann beispielsweise ein Einspurmodell des Fahrzeugs sein. In einem besonders einfachen Fall, kann der Soll-Lenkwinkel ein Ackermannwinkel sein, der aus dem Pfad und einem Radstand des Fahrzeugs ermittelt wird. Der Ackermannwinkel ist der Quotient aus dem Radstand und einem Krümmungsradius des Pfads, wobei der Radstand des Fahrzeugs den Dividend bildet und der Krümmungsradius den Divisor. Das Ermitteln des Soll-Lenkwinkels kann aber auch basierend auf komplexeren Zusammenhängen erfolgen.

Der Soll-Lenkwinkel und der Ist-Lenkwinkel, der tatsächlich in der Fahrsituation vorliegt, werden zum Ermitteln einer Lenkwinkelabweichung verwendet. Die Lenkwinkelabweichung kennzeichnet eine Abweichung zwischen Soll-Lenkwinkel und Ist-Lenkwinkel. Der Lenkwinkeltoleranzwert wird im Verfahren bereitgestellt. Eine Instabilität wird ermittelt, falls die Lenkwinkelabweichung den Lenkwinkeltoleranzwert verletzt. Die Lenkwinkelabweichung verletzt den Lenkwinkeltoleranzwert, wenn die Lenkwinkelabweichung außerhalb eines Toleranzbandes, dessen Breite durch den Lenkwinkeltoleranzwert bestimmt wird, um den Soll-Lenkwinkel liegt. So wird bei einem Lenkwinkeltoleranzwert von beispielsweise 2° eine Instabilität dann früherkannt, wenn die Lenkwinkelabweichung einen Wert von ± 2° oder mehr aufweist. Durch das Berücksichtigen des Lenkwinkeltoleranzwerts können Fehler beim Ermitteln des Ist-Lenkwinkels und/oder des Soll-Lenkwinkels ausgeglichen werden und das Verfahren wird robuster gegenüber Fehlerkennungen. Vorzugsweise wird der Lenkwinkeltoleranzwert unter Verwendung einer Modellgüte eines zum Ermitteln des Soll-Lenkwinkels verwendeten Fahrzeugmodells definiert.

Eine Instabilität des Fahrzeugs ist vorzugsweise ein Übersteuern oder ein Untersteuern des Fahrzeugs. Übersteuern und Untersteuern sind gängige Begriffe zur Beschreibung des Fahrverhaltens von Fahrzeugen. Beim Untersteuern muss stärker gelenkt werden, um einer Kurve zu folgen, als bei einem neutralen Fahrzeug. Das Übersteuern des Fahrzeugs wird umgangssprachlich auch häufig als Ausbrechen des Fahrzeughecks umschrieben. Es soll verstanden werden, dass die in dem erfindungsgemäßen Verfahren früherkannten und vorzugsweise durch Fahrdynamikeingriffe reduzierten Abweichungen Fahrzustände betreffen können, die allgemein (noch) als stabiles Fahren empfunden werden können. So können bereits geringe Instabilitäten, bei deren Vorliegen das Fahrverhalten des Fahrzeugs von einem Fahrer des Fahrzeugs noch als stabiles Fahren empfunden wird, früherkannt werden. Die Instabilität kann basierend auf der Trajektorie ermittelt werden (Lenkung, Position). Es erfolgt nun also vorzugsweise eine Bewertung der noch "stabilen" Fahrt unter Verwendung der Trajektorie und vorzugsweise nicht ausschließlich basierend auf Beschleunigungssensorik.

Das Fahrzeug weist einen oder mehrere Fahrzeugaktuatoren auf, die dazu vorgesehen sind, eine Fahrdynamik des Fahrzeugs zu beeinflussen. Die Fahrdynamik umfasst zumindest eine Längsdynamik und/oder eine Querdynamik des Fahrzeugs. Ein Beispiel für einen Fahrzeugaktuator ist beispielsweise ein Antriebsmotor des Fahrzeugs, der dazu vorgesehen ist, das Fahrzeug zu beschleunigen bzw. die Geschwindigkeit des Fahrzeugs entgegen am Fahrzeug angreifender Widerstände konstant zu halten. Der Antriebsmotor beeinflusst demnach im Wesentlichen die Längsdynamik des Fahrzeugs. Es kann aber auch vorgesehen sein, dass mittels eines oder mehrerer Antriebsmotoren des Fahrzeugs auch eine Querdynamik des Fahrzeugs beeinflusst werden kann, beispielsweise dann, wenn nur einzelne Räder des Fahrzeugs angetrieben werden. Eine Bremse und/oder ein Bremssystem des Fahrzeugs ist ein weiteres Beispiel eines Fahrzeugaktuators. Es soll verstanden werden, das der Fahrzeugaktuator Bremssystem auch mehrere Subaktuatoren aufweisen kann. So kann das Bremssystem beispielsweise für jedes Rad des Fahrzeugs je einen Bremsaktuator aufweisen.

Der Fahrdynamikeingriff erfolgt vorzugsweise zum Stabilisieren des Fahrzeugs. Das erfindungsgemäße Verfahren verfolgt den Zweck, eine Genauigkeit zu verbessern, mit der das Fahrzeug einer intendierten Trajektorie eines Fahrers folgt. So kann eine Neigung des Fahrzeugs zum Untersteuern aufgrund falscher Beladung des Fahrzeugs gegenüber einem gewohnten Fahrverhalten stark erhöht sein, sodass ein vom Fahrer vorgegebener Lenkwinkel nicht ausreicht, um die intendierte Trajektorie zu befahren. Beispielsweise kann ein Fahrzeug aufgrund hecklastiger Beladung oder ein Sattelzug aufgrund einer hohen Belastung des Königszapfens zum Untersteuern neigen. Das Verfahren verbessert die Trajektorientreue bevorzugt dahingehend, dass das Fahrzeug trotz solch einer mangelhaften Lenkvorgabe des Fahrers der vom Fahrer intendierten Trajektorie besser folgt. Vorzugsweise kann das Fahrzeug bei stetiger Zugkraft bzw. konstantem Antriebsmoment stabilisiert werden.

Der Fahrdynamikeingriff wird unter Verwendung zumindest eines Fahrzeugaktuators des Fahrzeugs durchgeführt. Im Rahmen des Fahrdynamikeingriffs können aber auch mehrere Fahrzeugaktuatoren verwendet werden. Der Fahrdynamikeingriff ist dazu vorgesehen, der Instabilität des Fahrzeugs entgegenzuwirken. Es soll jedoch verstanden werden, dass der Fahrdynamikeingriff die Instabilität nicht vollständig beseitigen muss. So kann beispielsweise ein Untersteuern des Fahrzeugs durch den Fahrdynamikeingriff reduziert aber nicht vollständig beseitigt sein. So kann beispielsweise mittels eines Bremseingriffs einer Instabilität entgegengewirkt werden, bis die Instabilität durch Reduzieren der Fahrzeuggeschwindigkeit behoben ist. Das Reduzieren der Fahrzeuggeschwindigkeit kann beispielsweise durch Aussteuern eines Bremsschlupfs oder durch Reduzieren eines Antriebsmoments erfolgen.

Vorzugsweise weist das Verfahren ferner auf: Ermitteln einer Fahrzeugposition des Fahrzeugs in der Fahrsituation; und Ermitteln einer Soll-Ist-Abweichung zwischen der Fahrzeugposition und der Trajektorie. Die Fahrzeugposition ist die tatsächliche Position des Fahrzeugs in der Fahrsituation. Diese Fahrzeugposition kann von einer erwünschten Position des Fahrzeugs auf dem Pfad der Trajektorie abweichen. Dies ist insbesondere der Fall, wenn eine Instabilität des Fahrzeugs vorliegt. Beispielsweise ist eine Gierrate des Fahrzeugs beim Untersteuern zu gering und das Fahrzeug wird aus einer zu befahrenden Kurve getragen. In diesem Fall stellt sich eine Soll-Ist-Abweichung zwischen der Fahrzeugposition und der Trajektorie bzw. zwischen der Fahrzeugposition und einer dem Pfad entsprechenden Sollposition ein. Diese Soll-Ist-Abweichung kann dann im Verfahren ermittelt werden. Vorzugsweise ist oder umfasst die Soll-Ist-Abweichung eine Querablage des Fahrzeugs von einem von der Trajektorie umfassten Pfad. Die Querablage ist ein Versatz des Fahrzeugs bzw. der Fahrzeugposition von dem Pfad quer zur Fahrtrichtung des Fahrzeugs. Für ein untersteuerndes Fahrzeug ist eine solche Querablage typischerweise nach kurvenaußen gerichtet. Eine Querablage des Fahrzeugs von der Trajektorie ist besonders kritisch, da eine Querablage zur Fahrbahnmitte zu Kollisionen mit entgegenkommenden Fahrzeugen führen kann, während eine Querablage zum äußeren Fahrbahnrand dazu führen kann, dass das Fahrzeug von der Fahrbahn abkommt. Insbesondere bei Nutzfahrzeugen ist der zur Verfügung stehende Platz begrenzt. So steht beispielsweise für ein Nutzfahrzeug mit einer Breite von 2,5 m bei mittiger Fahrt auf einer Landstraße, die eine Breite von 3,5 m aufweist, je Seite nur ein freier Raum von 0,5 m zur Verfügung, um Instabilitäten rechtzeitig auszugleichen. Bevorzugt ist oder umfasst die Soll-Ist-Abweichung einen Richtungsfehler des Fahrzeugs zu einer von der Trajektorie umfassten Sollausrichtung des Fahrzeugs. Die Sollausrichtung ist eine im Rahmen der Trajektorie vorgesehene Ausrichtung des Fahrzeugs, die vorzugsweise mit Bezug zum Pfad festgelegt ist. In der Regel ist die Sollausrichtung so gewählt, dass die Front des Fahrzeugs in Richtung des Pfads weist. Bevorzugt ist der Richtungsfehler ein Schwimmwinkel zwischen einem von der Trajektorie umfassten Soll-Ausrichtungswinkel und einem in der Fahrsituation vorliegenden Ist-Ausrichtungswinkel. Ein Richtungsfehler ist ein starkes Indiz für eine fahrdynamische Instabilität des Fahrzeugs und eignet sich daher besonders zur Verwendung bei einem Früherkennen einer Instabilität. Beispielsweise schließt ein untersteuerndes Fahrzeug bzw. dessen Längsachse mit einer Tangente an dem Sollpfad einen Schwimmwinkel ein, da die Gierrate des Fahrzeugs zu gering ist, um die Fahrzeugfront entlang der Kurve auszurichten. Beim Übersteuern ist die Gierrate des Fahrzeugs hingegen zu hoch, sodass das Fahrzeug stärker in die Kurve eindreht als vorgesehen. Auch beim Übersteuern ergibt sich demnach ein Richtungsfehler des Fahrzeugs.

Gemäß einer ersten bevorzugten Ausführungsform ist eine Intensität des Fahrdynamikeingriffs proportional zu einem Betrag der Soll-Ist-Abweichung und/oder einem Betrag der Lenkwinkelabweichung. Für große Beträge der Soll-Ist-Abweichung und/oder der Lenkwinkelabweichung wird dann ein Fahrdynamikeingriff mit hoher Intensität durchgeführt während eine Soll-Ist-Abweichung und/oder Lenkwinkelabweichung mit geringem Betrag in einem Fahrdynamikeingriff mit geringerer Intensität resultiert. Wenn der Fahrdynamikeingriff beispielsweise eine Verzögerung des Fahrzeugs ist oder umfasst, dann wird das Fahrzeug für einen großen Betrag der Lenkwinkelabweichung von beispielsweise 10° stärker gebremst (d.h. mit höherer Intensität) als bei einem geringeren Betrag der Lenkwinkelabweichung von 2°. Analog kann das Fahrzeug bei Vorliegen einer Querablage von 0,8 m vom Pfad stärker gebremst werden als bei einer Querablage von 0,2 m. Durch Verwenden des Betrags der Soll-Ist-Abweichung bzw. der Lenkwinkelabweichung kann das Verfahren unabhängig von einer Lenkrichtung eingesetzt werden. Es soll jedoch verstanden werden, dass das Vorzeichen der Soll-Ist-Abweichung und/oder des Lenkwinkels zum Ermitteln der Seite bzw. Richtung des Fahrdynamikeingriffs verwendet werden kann. Durch Skalieren der Intensität des Fahrdynamikeingriffs proportional zum Betrag der Lenkwinkelabweichung kann schleichenden Abweichungen entgegengewirkt werden. So ist es möglich, als unsicher empfundene sprunghafte Fahrdynamikeingriffe zu verhindern.

In einer bevorzugten Weiterbildung umfasst das Verfahren ferner ein Bereitstellen eines Trajektorientoleranzwerts für die Soll-Ist-Abweichung, wobei das Früherkennen einer Instabilität des Fahrzeugs nur erfolgt, falls die ermittelte Lenkwinkelabweichung den Lenkwinkeltoleranzwert verletzt und die Soll-Ist-Abweichung den Trajektorientoleranzwert verletzt. Das Verfahren umfasst dann eine weitere Bedingung für das Früherkennen der Instabilität. Die Instabilität wird demnach nur erkannt, wenn sowohl eine Verletzung des Lenkwinkeltoleranzwerts durch die ermittelte Lenkwinkelabweichung als auch eine Verletzung des Trajektorientoleranzwerts durch die ermittelte Soll-Ist-Abweichung vorliegt. Das Risiko für Fehlerkennungen von Instabilitäten kann reduziert werden. So führen beispielsweise Fehler beim Ermitteln des Soll-Lenkwinkels nicht zu einem Früherkennen einer Instabilität, wenn der Ist-Lenkwinkel einem tatsächlich benötigten Lenkwinkel für die Fahraufgabe entspricht und das Fahrzeug der Trajektorie ohne Soll-Ist-Abweichung folgt. Eine Güte des Verfahrens bzw. eine Robustheit des Verfahrens gegenüber Fehlern wird erhöht. Der Trajektorientoleranzwert ist vorzugsweise dann verletzt, wenn die Fahrzeugposition um mehr als den Trajektorientoleranzwert von der Trajektorie abweicht. Für einen Trajektorientoleranzwert von 1 m, ist der Trajektorientoleranzwert beispielsweise dann verletzt, wenn das Fahrzeug eine Querablage zum von der Trajektorie umfassten Pfad von 0,3 m hat.

Bevorzugt weist das Verfahren ferner auf: Überwachen der Soll-Ist-Abweichung, wobei die Soll-Ist-Abweichung beim Überwachen kontinuierlich oder an mehreren aufeinanderfolgenden Zeitpunkten ermittelt wird; Ermitteln einer Trajektorienabweichungsänderungsrate, wobei das Früherkennen einer Instabilität des Fahrzeugs nur erfolgt, falls die Trajektorienabweichungsänderungsrate eine zunehmende Soll-Ist-Abweichung der Fahrzeugposition von der Trajektorie kennzeichnet. Die Trajektorienabweichungsänderungsrate gibt die zeitliche Veränderung der Soll-Ist-Abweichung, also der Abweichung der Fahrzeugposition von der Trajektorie, an. Die Trajektorienabweichungsänderungsrate beschreibt vorzugsweise die Veränderung der Trajektorienabweichung über einem bestimmten Zeitraum im Verhältnis zur Dauer dieses Zeitraums. Der betrachtete Zeitraum ist bevorzugt kurz. Die Dauer des Zeitraums beträgt vorzugsweise 10 sec. (Sekunden) oder weniger, vorzugsweise 8 sec. oder weniger, vorzugsweise 6 sec. oder weniger, vorzugsweise 5 sec. oder weniger, vorzugsweise 4 sec. oder weniger, vorzugsweise 3 sec. oder weniger, vorzugsweise 2 sec. oder weniger, vorzugsweis 1 sec. oder weniger, bevorzugt 3 bis 40 msec (Millisekunden), besonders bevorzugt 5 bis 10 msec. Eine zunehmende Soll-Ist-Abweichung ist ein Indiz dafür, dass eine Instabilität vorliegt. Eine zunehmende Trajektorienabweichungsänderungsrate liegt beispielsweise dann vor, wenn das Fahrzeug bei einer Kurvenfahrt untersteuert und sich in Folge dessen eine Querablage des Fahrzeugs stetig vergrößert. Das Ermitteln der Trajektorienabweichungsänderungsrate erlaubt ein besonders einfaches Früherkennen von Abweichungen einer Ist-Bewegung des Fahrzeugs von einer Soll-Bewegung gemäß der Trajektorie. Ausgehend von einem Zustand, in dem das Fahrzeug auf dem Pfad fährt, bewirkt bereits das Entstehen einer kleinen Soll-Ist-Abweichung eine zunehmende Trajektorienabweichungsänderungsrate. So kann auch bei kleinen absoluten Soll-Ist-Abweichung eine Trajektorienabweichungsänderungsrate ermittelt werden. Durch das Berücksichtigen der Trajektorienabweichungsänderungsrate im Verfahren wird das Früherkennen einer Instabilität robuster und ein Risiko für Fehlerkennungen wird minimiert. Beispielsweise können Soll-Ist-Abweichungen nicht berücksichtigt werden, die daraus resultieren, dass das Fahrzeug bereits mit einer Querablage zum Pfad in eine Kurve einfährt, der Kurve dann aber mit gleichbleibender Querablage zum Pfad stabil folgt.

Gemäß einer bevorzugten Ausführungsform kompensiert der Fahrdynamikeingriff die Soll-Ist-Abweichung zumindest teilweise. In diesem Fall kann das Verfahren vorzugsweise so durchgeführt werden, dass der Fahrer, der den vom Soll-Lenkwinkel verschiedenen Ist-Lenkwinkel einstellt, den Fahrdynamikeingriff nicht wahrnimmt. Das Fahrverhalten des Fahrzeugs kann einem Fahrer dann besonders sicher erscheinen, da dieser nicht von seinem gewohnten Lenkwinkel abweichen muss. Wenn der Fahrdynamikeingriff die Soll-Ist-Abweichung zumindest teilweise kompensiert, dann nähert sich das Fahrzeug dem Pfad an. Das Risiko von Kollisionen des Fahrzeugs mit neben dem Pfad befindlichen Objekten ist reduziert. Der Fahrdynamikeingriff verbessert die Sicherheit des Fahrzeugs also vorzugsweise nicht nur in dem der Instabilität entgegengewirkt wird, sondern auch dadurch, dass eine Positionstreue des Fahrzeugs verbessert wird. Es soll jedoch verstanden werden, dass derselbe Fahrdynamikeingriff sowohl die Soll-Ist-Abweichung kompensieren als auch der Instabilität entgegenwirken kann.

Vorzugsweise umfasst das Verfahren ferner ein Beenden des Fahrdynamikeingriffs, falls die Soll-Ist-Abweichung eine Positionstoleranzgrenze erreicht oder unterschreitet. Der Fahrdynamikeingriff wird in der bevorzugten Ausgestaltung dann beendet, wenn sich die Soll-Ist-Abweichung soweit reduziert hat, dass die Positionstoleranzgrenze erreicht oder unterschritten wird. Beispielsweise kann ein Motormoment eines Antriebsmotors nur solange limitiert werden, bis die Querablage des Fahrzeugs von dem Pfad der Trajektorie eine Positionstoleranzgrenze von 0,3 m unterschreitet.

Bevorzugt weist das Verfahren ferner auf: Beenden des Fahrdynamikeingriffs, falls die Lenkwinkelabweichung eine Stabilitätsgrenze erreicht oder unterschreitet. Der Fahrdynamikeingriff kann dann beispielsweise beendet werden, wenn der Fahrer des Fahrzeugs die Instabilität bemerkt und durch Nachsteuern des Ist-Lenkwinkels ausgleicht. Für den Fall eines untersteuernden Fahrzeugs wird der Fahrdynamikeingriff beispielsweise dann beendet, wenn der Fahrer den Ist-Lenkwinkel erhöht und so dem Soll-Lenkwinkel annähert, um das Untersteuern auszugleichen. Durch die bevorzugte Weiterbildung des Verfahrens kann das Fahrverhalten des Fahrzeugs als besonders intuitiv empfunden werden. Es soll verstanden werden, dass der Fahrdynamikeingriff in Varianten bereits beendet werden kann, wenn nur die Lenkwinkelabweichung die Stabilitätsgrenze erreicht oder unterschreitet oder wenn nur die Soll-Ist-Abweichung die Positionstoleranzgrenze erreicht oder unterschreitet. Es kann aber auch vorgesehen sein, dass der Fahrdynamikeingriff nur beendet wird, wenn sowohl die Lenkwinkelabweichung die Stabilitätsgrenze erreicht oder unterschreitet als auch die Soll-Ist-Abweichung die Positionstoleranzgrenze erreicht oder unterschreitet. Das Beenden des Fahrdynamikeingriffs kann also vorzugsweise auch nur erfolgen, falls die beiden vorbeschriebenen Kriterien kumulativ vorliegen.

In einer bevorzugten Ausführungsform des Verfahrens weist das Bereitstellen einer Lenkwinkeltoleranzwert für die Lenkwinkelabweichung auf: Ermitteln zumindest einer geometrischen Charakteristik einer gegenwärtigen Fahrzeugkonfiguration des Fahrzeugs; Ermitteln zumindest einer Lastcharakteristik der gegenwärtigen Fahrzeugkonfiguration; Definieren des Lenkwinkeltoleranzwerts für die Lenkwinkelabweichung unter Verwendung der geometrischen Charakteristik und der Lastcharakteristik. In der bevorzugten Weiterbildung macht sich die Erfindung die Erkenntnis zunutze, dass das querdynamische Stabilitätsverhalten des Fahrzeugs erheblich von der gegenwärtigen Fahrzeugkonfiguration beeinflusst wird. Neben geometrischen Charakteristika haben auch Lastcharakteristika einen bedeutenden Einfluss auf das Stabilitätsverhalten des Fahrzeugs. Die Lastcharakteristik repräsentiert zumindest teilweise auf das Fahrzeug wirkende Lasten, die beispielsweise aus dem Eigengewicht des Fahrzeugs und aus einer Ladung des Fahrzeugs resultieren können. So ist eine gegenwärtige Fahrzeugkonfiguration eines unbeladenen Fahrzeugs verschieden von einer gegenwärtigen Fahrzeugkonfiguration desselben Fahrzeugs im beladenen Zustand. Eine Lastcharakteristik kann vorzugsweise eine Radlast, eine Achslast, eine Fahrzeuggesamtmasse, eine Masse eines Fahrzeugteils und/oder eine Schwerpunktlage des Fahrzeugs oder eines Fahrzeugteils sein oder umfassen. Ferner bevorzugt können die Lastcharakteristika auch Daten umfassen, die eine Radlast, eine Achslast, eine Fahrzeuggesamtmasse und/oder eine Masse eines Fahrzeugteils repräsentieren. Durch das Definieren des Lenkwinkeltoleranzwerts unter Verwendung der geometrischen Charakteristik und der Lastcharakteristik, kann die gegenwärtige Fahrzeugkonfiguration berücksichtigt werden. So kann der Lenkwinkeltoleranzwert beispielsweise dann vergleichsweise klein bzw. eng definiert werden, wenn die Lastcharakteristik ein hecklastig beladendes Fahrzeug repräsentiert, das im Vergleich zu einem zentral beladenen Fahrzeug in der Regel schneller zu Instabilitäten neigt.

Vorzugsweise ist der Fahrdynamikeingriff ein Bremseingriff an einer oder mehreren Radbremsen des Fahrzeugs, eine Motormomentenlimitierung eines Motors des Fahrzeugs, ein Bereitstellen asymmetrischer Antriebsmomente an Rädern des Fahrzeugs und/oder ein Bereitstellen eines unterstützenden Lenkmoments mittels einer lenkbaren Hinterachse des Fahrzeugs ist. Vorzugsweise wird der Fahrdynamikeingriff unter Verwendung eines Fahrzeugaktuators ausgeführt, der von einer Lenkung des Fahrzeugs, an der der Ist-Lenkwinkel in der Fahrsituation eingestellt wird, verschieden ist. Der Fahrzeugaktuator ist vorzugsweise dazu geeignet, ein Giermoment auf das Fahrzeug aufzubringen. Vorzugsweise ist eine Intensität des Bremseingriffs proportional zur Soll-Ist-Abweichung. So kann beispielsweise umso stärker gebremst werden, je größer eine Querablage des Fahrzeugs von dem Pfad ist.

Bevorzugt weist das Verfahren ferner auf: Ermitteln einer Lenkoszillation unter Verwendung eines Zeitverlaufs des Ist-Lenkwinkels; und in Antwort auf das Ermitteln einer Lenkoszillation: Herabsetzen des Lenkwinkeltoleranzwerts, falls eine Lenkoszillation ermittelt wird, die in einem Eigenfrequenzband des Fahrzeugs liegt. Vorzugsweise umfasst das Verfahren ein Ermitteln des Eigenfrequenzbands, das besonders bevorzugt basierend auf einem Fahrzeugmodell des Fahrzeugs erfolgt. In Fällen in denen am Fahrzeug eine Lenkoszillation vorliegt, die innerhalb eines Eigenfrequenzbands um eine Eigenfrequenz des Fahrzeugs liegt, besteht die Gefahr, dass die Lenkoszillation bzw. die dadurch bedingte Anregung des Fahrzeugs zu einer Resonanz des Fahrzeugs führt. In diesem Fall ist es vorteilhaft, den Lenkwinkeltoleranzwert herabzusetzen bzw. die Toleranz zu reduzieren. Durch das Herabsetzen des Lenkwinkeltoleranzwerts führen bereits geringere Lenkwinkelabweichungen zu einem Früherkennen der Instabilität. So kann eine Instabilität bei herabgesetztem Lenkwinkeltoleranzwert beispielsweise bereits bei einer Lenkwinkelabweichung von 1° erkannt werden, wohingegen erst eine Lenkwinkelabweichung von 2° zu einem Früherkennen einer Instabilität führt, wenn keine Lenkoszillation ermittelt wird oder die ermittelte Lenkoszillation nicht im Eigenfrequenzband des Fahrzeugs liegt.

Gemäß einer bevorzugten Weiterbildung weist das Verfahren auf: Ermitteln eines Ist-Knickwinkels zwischen einem Zugfahrzeug und einem Anhängerfahrzeug des Fahrzeugs; Ermitteln eines Soll-Knickwinkels unter Verwendung der Trajektorie; und Herabsetzen des Lenkwinkeltoleranzwerts, falls der Ist-Knickwinkel den Soll-Knickwinkel um einen Knickwinkeltoleranzwert überschreitet. Das Ermitteln eines Soll-Knickwinkels erfolgt vorzugsweise unter Verwendung eines Fahrzeugmodells, insbesondere eines Einspurmodells des Fahrzeugs. Das Fahrzeugmodell kann eine oder mehrere Lastcharakteristika und eine oder mehrere geometrische Charakteristika des Fahrzeugs umfassen. Ein Ist-Knickwinkel, der den Soll-Knickwinkel für eine Fahrsituation überschreitet, ist ein starkes Indiz für eine Instabilität des Anhängerfahrzeugs. Beispielsweise kann unter Verwendung des Knickwinkels ein Aufschieben des Anhängerfahrzeugs, das englisch auch als jack knifing umschrieben wird, oder ein Ausbrechen des Anhängerfahrzeugs ermittelt werden. Beides sind sehr kritische und gefährliche Situation, die frühzeitig durch Ermitteln des Ist-Knickwinkels erkannt werden können, der vorzugsweise permanent mit dem Soll-Knickwinkel, der bevorzugt basierend auf einer Modellrechnung ermittelt wird, verglichen wird. Ist das Anhängerfahrzeug in einer solchen Fahrsituation beispielsweise leer und das Zugfahrzeug beladen, ist es sehr wahrscheinlich, dass der Fahrer des Zugfahrzeug nichts davon bemerkt, weil das Zugfahrzeug vollkommen stabil bleibt. In der bevorzugten Weiterbildung kann eine Sicherheit des Verfahrens verbessert werden, da bereits verhältnismäßig kleinere Lenkwinkelabweichungen zu einem Früherkennen einer Instabilität führen.

In einem zweiten Aspekt löst die Erfindung die eingangs genannte Aufgabe mit einem Fahrerassistenzsystem zum Verbessern einer Trajektorientreue eines Fahrzeugs, das dazu ausgebildet ist, das Verfahren gemäß dem ersten Aspekt der Erfindung auszuführen. Vorzugsweise umfasst das Fahrerassistenzsystem eine Steuereinheit und eine Schnittstelle, die mit einem Fahrzeugnetzwerk des Fahrzeugs verbunden werden kann. Die Schnittstelle ist vorzugsweise zum Empfangen von Fahrzeugsignalen ausgebildet, welche zumindest die Trajektorie, den Lenkwinkel-Erwartungswert, den Lenkwinkel-Istwert und/oder die Stellgrößenabweichung repräsentieren. Ferner können die Fahrzeugsignale auch die Lastcharakteristik repräsentieren. Es soll verstanden werden, dass einer oder mehrere der Ermittlungsschritte des Verfahrens von dem Fahrerassistenzsystem basierend auf solchen Fahrzeugsignalen durchgeführt werden kann. Das Fahrerassistenzsystem muss also beispielsweise die Lastcharakteristik nicht unmittelbar selbst ermitteln, sondern kann diese beispielsweise auch basierend auf Lastsignalen ermitteln, die von einem Luftfedersystem des Fahrzeugs auf dem Fahrzeugnetzwerk bereitgestellt werden.

In einem dritten Aspekt löst die Erfindung die eingangs genannte Aufgabe durch ein Fahrzeug mit zumindest zwei Achsen, einer autonomen Einheit, einer Lenkung, und einem Fahrerassistenzsystem gemäß dem zweiten Aspekt der Erfindung.

Gemäß einem vierten Aspekt der Erfindung wird die eingangs genannte Aufgabe mittels eines Computerprogrammprodukts gelöst, das Programmcode-Mittel aufweist, die auf einem computerlesbaren Datenträger gespeichert sind, um das Verfahren gemäß dem ersten Aspekt der Erfindung auszuführen, wenn das Computerprogrammprodukt auf einer Recheneinheit, insbesondere der Steuereinheit des Fahrerassistenzsystems gemäß dem zweiten Aspekt der Erfindung, ausgeführt wird.

Es soll verstanden werden, dass das Fahrerassistenzsystem gemäß dem zweiten Aspekt der Erfindung, das Fahrzeug gemäß dem dritten Aspekt der Erfindung und das Computerprogrammprodukt gemäß dem vierten Aspekt der Erfindung gleiche und ähnliche Unteraspekte aufweisen, wie sie insbesondere in den abhängigen Ansprüchen zum Verfahren gemäß dem ersten Aspekt der Erfindung niedergelegt sind. Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen, diese zeigen in:
- Fig. 1: eine Draufsicht auf ein schematisch dargestelltes Fahrzeug;
- Fig. 2a: eine als Kurvenfahrt illustrierte Fahrsituation des Fahrzeugs gemäß Fig. 1, wobei das Fahrzeug untersteuert;
- Fig. 2b: eine als Kurvenfahrt illustrierte Fahrsituation des Fahrzeugs gemäß Fig. 1, wobei das Fahrzeug übersteuert;
- Fig. 3: ein schematisches Ablaufdiagramm eines Verfahrens zum Steuern des Fahrzeugs;
- Fig. 4: ein Diagramm, das für eine Fahrsituation einen Verlauf eines Ist-Lenkwinkels, eines Soll-Lenkwinkels, einer Krümmung eines Pfads, einer Querablage des Fahrzeugs und eines Richtungsfehlers des Fahrzeugs illustriert, wobei kein Fahrdynamikeingriff erfolgt;
- Fig. 5: eine zu Fig. 5 analoge Darstellung, wobei nur ein Teil der Fahrsituation illustriert ist und ein Fahrdynamikeingriff erfolgt, um einer Instabilität entgegenzuwirken;
- Fig. 6: ein schematisches Ablaufdiagramm, das ein Bereitstellen eines Lenkwinkeltoleranzwerts des Verfahrens gemäß Fig. 4 weiter illustriert.

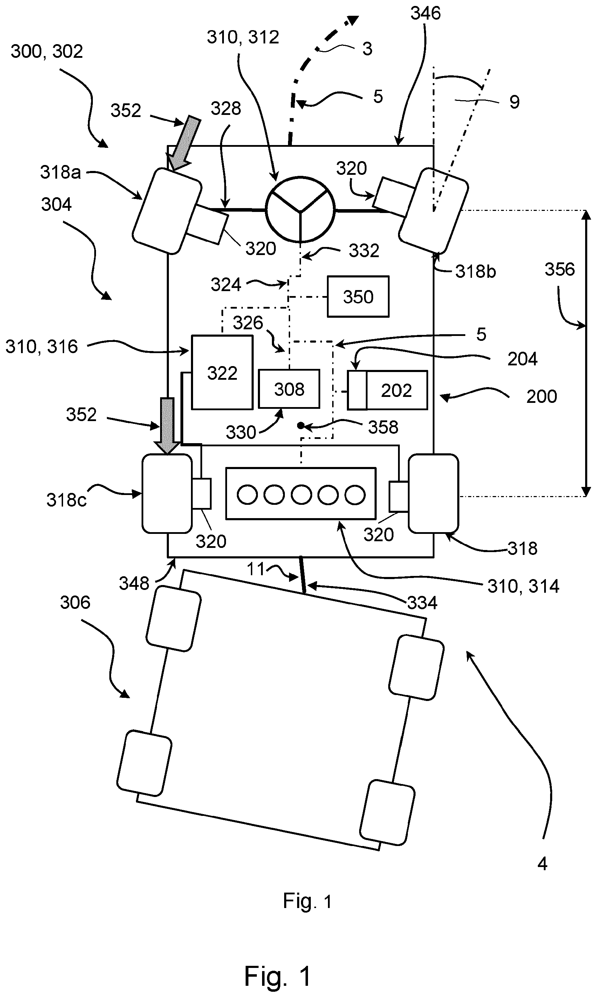

Fig. 1 zeigt ein Fahrzeug 300, das hier als Fahrzeugzug 302 ausgebildet ist. Der Fahrzeugzug 302, der ein Nutzfahrzeug ist, umfasst ein Zugfahrzeug 304, das ein Anhängerfahrzeug 306 zieht. Zum Steuern des Fahrzeugs 300 ist eine autonome Einheit 308 vorgesehen, die auch als virtueller Fahrer bezeichnet wird und dazu ausgebildet ist, eine Trajektorienplanung durchzuführen, um eine Trajektorie 3 für das Fahrzeug 300 zu erhalten. Die Trajektorie 3 umfasst einen vom Fahrzeug 300 zu befahrenden Pfad 5. Diesem Pfad 5 soll das Fahrzeug 300 gemäß der Trajektorie 3 folgen.

Das Fahrzeug 300 umfasst als Fahrzeugaktuatoren 310 eine elektronisch steuerbare Lenkung 312, einen Antriebsmotor 314 und ein Bremssystem 316. Das Bremssystem 316 ist zum Verzögern von Rädern 318 des Fahrzeugs 300 vorgesehen. Hierfür weist das Bremssystem 316 den Rädern 318 zugeordnete Bremsaktuatoren 320 auf. Die Bremsaktuatoren 320 sind Subaktuatoren des von dem Bremssystem 316 gebildeten Fahrzeugaktuators 310 und steuern einen Bremsschlupf der Räder 318 aus. Dieser Bremsschlupf korrespondiert zu einem an den Bremsaktuatoren 320 bereitgestellten Bremsdruck, der von einem Bremsmodulator 322 des Bremssystems 316 bereitgestellt wird. Die autonome Einheit 308 des Fahrzeugs 300 ist über ein Fahrzeugnetzwerk 324, das hier ein CAN-Bus ist, mit dem Bremsmodulator 322 verbunden und stellt daran Bremssignale 326 bereit. Der Bremsmodulator 322 empfängt die Bremssignale 326 von der autonomen Einheit 308 und steuert korrespondierende Bremsdrücke für die Bremsaktuatoren 320 aus. Es soll verstanden werden, dass die für die verschiedenen Räder 318 bereitgestellten Bremsdrücke variieren können. Ein Bremsdruck an einem linken Vorderrad 318a einer Vorderachse 328 des Fahrzeugs 300, kann also zu einem Bremsdruck verschieden sein, der an dem Bremsaktuator 320 bereitgestellt wird, der einem rechten Vorderrad 318b des Fahrzeugs 300 zugeordnet ist. Ferner ist das Bremssystem 316 auch zum Verzögern des Anhängerfahrzeugs 306 vorgesehen, wobei in Fig. 1 nur Bremsaktuatoren 320 des Zugfahrzeugs 304 dargestellt sind.

Die autonome Einheit 308 des in Fig. 1 gezeigten Fahrzeugs 300 ist ferner als Positionsregler 330 ausgebildet. Die autonome Einheit 308 steuert das Fahrzeug 300 in einer regulären Fahrsituation entlang des von der Trajektorie 3 umfassten Pfads 5. Hierfür steuert die autonome Einheit 308 den Antriebsmotor 314, das Bremssystem 316 und die elektronisch steuerbare Lenkung 312 derart an, dass das Fahrzeug 300 dem Pfad 5 mit einer von der Trajektorie 3 umfassten Soll-Geschwindigkeit 7 folgt, wobei die Soll-Geschwindigkeit 7 entlang des Pfads 5 variieren kann bzw. ein Geschwindigkeitsprofil darstellen kann. Das Fahrzeugnetzwerk 324 verbindet neben dem Bremssystem 316 und der autonomen Einheit 308 auch die elektronisch steuerbare Lenkung 312 und ein in Fig. 1 nicht dargestelltes Motorsteuergerät des Antriebsmotors 314 miteinander. Zum Steuern des Fahrzeugs 300 stellt die autonome Einheit 308 Signale auf dem Fahrzeugnetzwerk 324 bereit, die dann von den übrigen Einheiten des Fahrzeugs 300 empfangen werden können.

Die elektronisch steuerbare Lenkung 312 empfängt von der autonomen Einheit 308 bereitgestellte Lenksignale 332 und lenkt das Fahrzeug 300 entsprechend dieser Lenksignale 332. Hierzu steuert die elektronisch steuerbare Lenkung 312 einen zu den von der autonomen Einheit 308 bereitgestellten Lenksignalen 332 korrespondierenden Ist-Lenkwinkel 9 an den Vorderrädern 318a, 318b des Zugfahrzeugs 304 aus. Simultan steuert die autonome Einheit 308 die Längsbeschleunigung des Fahrzeugs 300 durch entsprechende Signale an den Antriebsmotor 314 und das Bremssystem 316.

Das Zugfahrzeug 304 und das Anhängerfahrzeug 306 sind mittels einer Deichsel 334 verbunden, wobei das Anhängerfahrzeug 306 hier keinen eigenen Antrieb umfasst und von dem Zugfahrzeug 304 gezogen wird. Das Anhängerfahrzeug 306 folgt dem Zugfahrzeug 304, wobei sich zwischen dem Zugfahrzeug 304 und dem Anhängerfahrzeug 306 ein Ist-Knickwinkel 11 einstellt. Bei stationärer Fahrt in gerader Richtung, hat der Ist-Knickwinkel 11 einen Wert von 0°, da das Anhängerfahrzeug 306 gerade hinter dem Zugfahrzeug 304 herfährt.

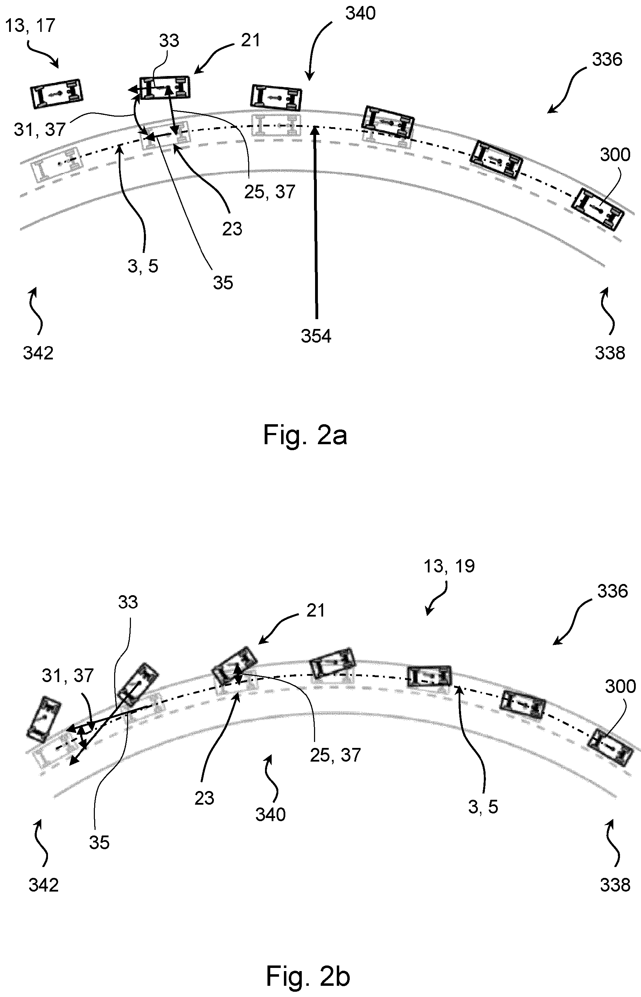

Bei stabiler Fahrt steuert allein der virtuelle Fahrer 308 das in Fig. 1 gezeigte, vollautonome Fahrzeug 300. In bestimmten Situationen kann es aber dazu kommen, dass das Fahrzeug 300 instabil wird oder ein abweichendes Fahrverhalten zeigt, das nicht dem im Rahmen der Trajektorienplanung angenommene Fahrverhalten entspricht. Dies ist häufig der Fall, wenn das Fahrzeug 300 ungünstig beladen ist. Eine ungünstige Beladung liegt beispielsweise dann vor, wenn das Anhängerfahrzeug 306 voll beladen ist, während das Zugfahrzeug 304 leer ist. In diesem Fall neigt das Fahrzeug 300 zu Instabilitäten, da das Anhängerfahrzeug 306 das Zugfahrzeug 304 von hinten schieben kann. Ferner kann eine Abweichung zwischen dem angenommenen Fahrverhalten und einem realen Fahrverhalten beispielsweise dann vorliegen, wenn eine Beladungssituation eines als Sattelauflieger ausgebildeten Anhängerfahrzeugs 306 zu einer erhöhten Hinterachslast eines als Sattelzugmaschine ausgebildeten Zugfahrzeugs 304 führt und so ein untersteuerndes Fahrverhalten hervorruft. Ferner können schlechte Straßenverhältnisse, wie beispielsweise Straßenglätte oder reduzierte Reibung zwischen Rädern 318 des Fahrzeugs 300 und einer Fahrbahn 334 (vgl. Fig. 2a, 2b) aufgrund einer Ölspur, Sand oder Rollsplitt, dazu führen, dass das Fahrzeug 300 dem von der Trajektorie 3 umfassten Pfad 5 nicht folgen kann.

Zwei Arten von Instabilitäten 13, die sich in einer Fahrsituation 15 einstellen können, sind ein Untersteuern 17 und ein Übersteuern 19 des Fahrzeugs 300. Fig. 2a und Fig. 2b illustrieren die Fahrsituation 15 als eine Kurvenfahrt des Fahrzeugs 300, wobei zur Vereinfachung nur das Zugfahrzeug 304 dargestellt ist. Fig. 2a und Fig. 2b illustrieren diese instabilen Fahrzustände anhand eines vereinfacht dargestellten Fahrzeugs 300. Fig. 2a zeigt ein Untersteuern 17 des Fahrzeugs 300, während Fig. 2b ein Übersteuern 19 des Fahrzeugs 300 illustriert. Die Instabilität 13 (das Untersteuern 17 bzw. das Übersteuern 19) ist in Fig. 2a und Fig. 2b jeweils einem stabilen Fahrzustand, in dem das Fahrzeug 300 dem Pfad 5 ideal folgt, überlagert. Das dem Pfad 5 der Trajektorie 3 ideal folgende Fahrzeug 300 ist in Fig. 2a und Fig. 2b mit geringerem Kontrast dargestellt. Bei der Einfahrt in die dargestellte Kurve 336 ist eine Fahrzeugposition 21 des Fahrzeugs 300 bei Vorliegen der Instabilität 13 noch im Wesentlichen identisch zu einer Sollposition 23 des Fahrzeugs 300 auf der Trajektorie 3 bzw. deren Pfad 5.

In Fig. 2a durchfährt das Fahrzeug 300 die Kurve 336 von rechts nach links. Ein Kur-Kurveneingang 338 ist also nahe des rechten Bildrandes dargestellt, während ein Kurvenausgang 342 nahe des linken Bildrandes angeordnet ist. Ein Kurvenscheitel 340 der Kurve 336 liegt zwischen dem Kurveneingang 338 und dem Kurvenausgang 342. Im instabilen Fall kann das Fahrzeug 300 dem Verlauf der Kurve 336, der hier der Verlauf der Trajektorie 3 ist, nicht folgen. Beim Untersteuern 17 weicht das Fahrzeug 300 nach kurvenaußen von dem geplanten Pfad 5 ab, der exakt dem Verlauf der Kurve 336 entspricht. Eine Querablage 25 des Fahrzeugs 300 zum Pfad 5 bzw. zur Trajektorie 3 nimmt vom Kurveneingang 338 zum Kurvenausgang 342 kontinuierlich zu. Eine Ist-Gierrate 27 des Fahrzeugs 300 ist geringer als eine Soll-Gierrate 29, sodass sich das Fahrzeug 300 weniger stark in die Kurve 336 dreht, als zum Folgen der Trajektorie 3 benötigt wird. Ein Richtungsfehler 31 zwischen einer Ist-Ausrichtung 33 des Fahrzeugs 300 in der Fahrzeugposition 21 und einer Sollausrichtung 35 des stabil fahrenden Fahrzeugs 300 nimmt zum Kurvenausgang 340 ebenfalls zu. Hier ist der Richtungsfehler 31 ein Schwimmwinkel des Fahrzeugs 300. Im gezeigten Ausführungsbeispiel stellt sich im Verlauf der Kurvenfahrt also eine mehrdimensionale Soll-Ist-Abweichung 37 zwischen der Fahrzeugposition 21 und der Trajektorie 3 ein. Zum einen weicht die Fahrzeugposition 21 in Form der Querablage 25 quer zu einer durch einen Pfeil illustrierten Fahrtrichtung 344 von der Sollposition 23 ab und zum anderen ist die Ist-Ausrichtung 33 der Fahrzeugposition 21 von der Sollausrichtung 35 verschieden.

Fig. 2b illustriert ein übersteuerndes Fahrzeug 300. Beim Übersteuern 19 dreht das Fahrzeug 300 stärker ein, als es notwendig wäre, um dem Pfad 5 der Trajektorie 3 zu folgen. Auch wenn der Ist-Lenkwinkel 9 des Fahrzeugs 300 kleiner als ein Soll-Lenkwinkel 39 ist, oder gar in die entgegengesetzte Richtung zeigt, überschreitet die Ist-Gierrate 27 des Fahrzeugs 300 beim Übersteuern 19 die Soll-Gierrate 29, die erforderlich ist, um der 336 ideal zu folgen. Der Richtungsfehler 31 nimmt beim Übersteuern 19 vom Kurveneingang 338 hin zum Kurvenausgang 342 ebenfalls kontinuierlich zu, hat aber im Vergleich zum Untersteuern 17 ein anderes Vorzeichen. So weist eine Front 346 des Fahrzeugs 300 beim Übersteuern 19 weiter nach kurveninnen als beim stabil fahrenden Fahrzeug 300, wohingegen die Front 346 des Fahrzeugs 300 beim Untersteuern 17 weiter nach kurvenaußen gerichtet ist als beim stabil fahrenden Fahrzeug 300. Aufgrund der im Vergleich zur Soll-Gierrate 29 überhöhten Ist-Gierrate 27 bricht ein Heck 348 des Fahrzeugs 300 beim Übersteuern 19 aus. Im Ausführungsbeispiel gemäß Fig. 2b nimmt dabei auch eine Querablage 25 des Fahrzeugs 300 nach kurvenaußen zu.

In Extremfällen hält die autonome Einheit 308 den Ist-Lenkwinkel 9 konstant und passt diesen trotz Vorliegen der Soll-Ist-Abweichung 37 nicht an die Fahrsituation 15 an. In der Regel überwacht die als Positionsregler 330 ausgebildete autonome Einheit 308 jedoch die Fahrzeugposition 21 des Fahrzeugs 300. Sobald die autonome Einheit 308 eine erhebliche Soll-Ist-Abweichung 37 detektiert, versucht die autonome Einheit 308 durch entsprechende Steuereingriffe das Fahrzeug 300 auf den Pfad 5 der Trajektorie 3 zurückzuführen. Dies gelingt der autonomen Einheit 304 jedoch hier nicht vollständig. Für den Fall des Untersteuerns 17 (vgl. Fig. 2a), erhöht die autonome Einheit 308 den Ist-Lenkwinkel 9 umso schneller, je größer die Querablage 25 des Fahrzeugs 300 ist. Sobald diese Anpassung des Ist-Lenkwinkels 9 durch die autonome Einheit 308 eine vordefinierte Änderungsrate übersteigt, greift ein Stabilitätsregelsystem 350 des Fahrzeugs 300 stabilisierend ein. Das Stabilitätsregelsystem 350 ist hier eine Electronic Stability Control (ESC), die mit dem Fahrzeugnetzwerk 324 verbunden ist (vgl. Fig. 1). Das ESC stellt Bremssignale 326 auf dem Fahrzeugnetzwerk 324 bereit, die das Bremssystem 316 des Fahrzeugs 300 dazu veranlassen, an dem Bremsaktuatoren 320, die den kurveninneren Rädern des Fahrzeugs 300 zugeordnet sind, einen Bremsdruck auszusteuern. Die Bremsaktuatoren verzögern also die kurveninneren Räder. Für die Kurve 336 gemäß Fig. 2a sind die kurveninneren Räder ein linkes Vorderrad 318a und ein linkes Hinterrad 318c des Fahrzeugs 300. Die Verzögerung ist in Fig. 1 durch Pfeile 352 illustriert. Beim Übersteuern 19 (vgl. Fig. 2b) wird hingegen vorzugsweise ein kurvenäußeres Vorderrad, das für die Linkskurve 336 gemäß Fig. 2b ein rechtes Vorderrad 318b des Fahrzeugs ist, verzögert.

Das Stabilitätsregelsystem 350 ist ein Notfallsystem, das erst dann regelnd in den Fahrbetrieb des Fahrzeugs 300 eingreift, wenn sehr große Instabilitäten auftreten. Das Stabilitätsregelsystem 350 interpretiert aus einem Lenkwunsch des Fahrers und einer gemessenen Fahrzeugbewegung einen Regelbedarf. Der Fahrer hat also die Aufgabe die von ihm erkannte Instabilität 13 in der Weise in einen Lenkwunsch umzusetzen, dass ihn das Stabilitätsregelsystem 350 unterstützt, die Instabilität 13 zu reduzieren. Eingriffe des ESC in stabilen Fahrzuständen müssen vermieden werden, da diese die Sicherheit des Fahrzeugs 300 erheblich beeinträchtigen würden und zu Unfällen führen könnten. Eine Eingriffsschwelle des Stabilitätsregelsystems 350 ist daher so hoch gewählt, dass erst große Instabilitäten des Fahrzeugs 300 zu einem Eingriff des Stabilitätsregelsystems 350 (ESC) führen. Die hoch gewählten Eingriffsschwellen des Stabilitätsregelsystems 350 bedingen, dass ein stabilisierender Eingriff des Stabilitätsregelsystems 350 erst spät erfolgt, sodass das Fahrzeug 300 bereits eine sehr große Querablage 25 zum Pfad 5 der Trajektorie 3 haben kann, wenn das Stabilitätsregelsystem 350 eingreift. Der späte Eingriff des Stabilitätsregelsystems 350 birgt daher das Risiko, dass das Fahrzeug von der Fahrbahn 334 abkommt und/oder aufgrund des erhöhten Platzbedarfs mit einem Hindernis kollidiert. Auch beim Übersteuern 19 greift das ESC erst spät ein, da Fehleingriffe, die beispielsweise aus Messfehlern resultieren können, vermieden werden müssen. Sofern kein weiteres System vorgesehen ist, obliegt es dem virtuellen Fahrer 308 eine Soll-Ist-Abweichung 37 frühzeitig zu erkennen.

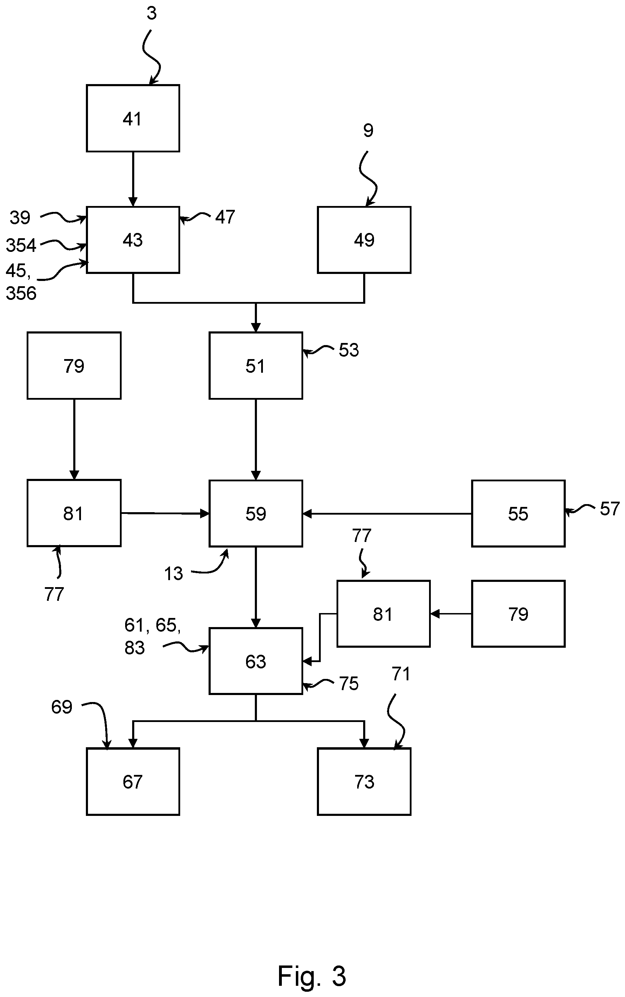

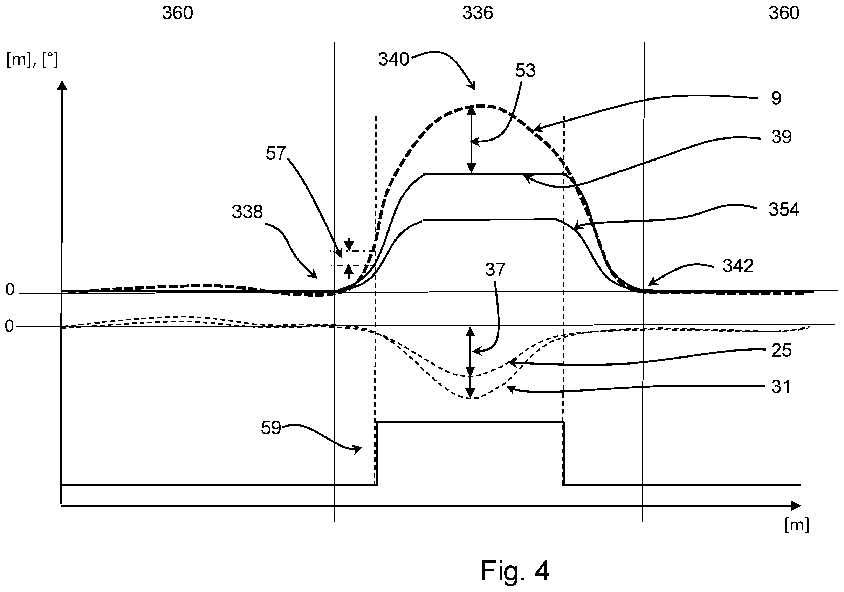

Das Fahrzeug 300 umfasst daher zusätzlich ein Fahrerassistenzsystem 200, das zum Früherkennen einer Instabilität 13 vorgesehen ist. Das Fahrerassistenzsystem 200 weist eine Steuereinheit 202, die hier mittels einer Schnittstelle 204 ebenfalls mit dem Fahrzeugnetzwerk 324 verbunden ist. Die Steuereinheit 202 ist dazu ausgebildet Bremssignale 326 für das Bremssystem 316 und Lenksignale 332 auf dem Fahrzeugnetzwerk 324 bereitzustellen. Ferner empfängt die Steuereinheit 202 des Fahrerassistenzsystem 200 die Trajektorie 3, die von der autonomen Einheit 308 auf dem Fahrzeugnetzwerk 324 bereitgestellt wird. In alternativen Varianten kann das Fahrerassistenzsystem 200 oder dessen Steuereinheit 202 aber auch Teil der autonomen Einheit 308 sein. Das Fahrerassistenzsystem 200 ist dazu ausgebildet, das nachfolgend mit Bezug zu Fig. 3 und Fig. 4 erläuterte Fahrzeugsteuerverfahren 1 auszuführen.

In einem ersten Schritt des Verfahrens 1, ermittelt das Fahrerassistenzsystem 200 im Rahmen eines Ermittelns 41 die auf dem Fahrzeugnetzwerk 324 bereitgestellte Trajektorie 3. Unter Verwendung der Trajektorie 3 ermittelt die Steuereinheit 202 in einem darauffolgenden Schritt (Ermitteln 43 in Fig. 3) den Soll-Lenkwinkel 39. Für die in Fig. 2a illustrierte Fahrsituation 15 ermittelt die Steuereinheit 202 zunächst einen Krümmungsradius 354 der Trajektorie 3, der in Fig. 2 vereinfach als Pfeil angedeutet ist. Ferner ermittelt die Steuereinheit 202 einen Radstand 354 des Zugfahrzeugs 304. Hieraus berechnet die Steuereinheit 202 als Soll-Lenkwinkel 39 einen Ackermannwinkel, indem die Steuereinheit den Radstand 356 durch den Krümmungsradius 354 teilt. Der Soll-Lenkwinkel 39 wird im gezeigten Ausführungsbeispiel demnach basierend auf dem Krümmungsradius 354 ermittelt, der sich aus der zu erfüllenden Fahraufgabe ergibt. Ferner berücksichtigt die Steuereinheit 202 beim Ermitteln 43 des Soll-Lenkwinkels 39 aber auch eine geometrische Charakteristik 45, nämlich den Radstand 356. Beim Ermitteln 43 werden so auch fahrzeugspezifische Aspekte berücksichtigt. Der Ackermannwinkel ist ein zur Illustration verwendetes einfaches Beispiel für das Ermitteln 43 des Soll-Lenkwinkels 39. In anderen Varianten des Verfahrens 1 können zum Ermitteln 43 des Soll-Lenkwinkels 39 aber auch komplexere Zusammenhänge berücksichtigt werden. Vorzugsweise basiert das Ermitteln 43 ferner auf einer Lastcharakteristik 47 des Fahrzeugs 300. Eine solche Lastcharakteristik 47 ist in Fig. 1 als Lage eines Schwerpunkts 358 des Zugfahrzeugs 304 illustriert. Der Schwerpunkt 358 des Zugfahrzeugs 304 ist aufgrund ungünstiger Beladung des Fahrzeugs 300 in einer gegenwärtigen Fahrzeugkonfiguration 4 zum Heck 348 verschoben, sodass das Fahrzeug 300 zum Untersteuern 17 neigt. Durch das Verwenden der Lastcharakteristik 47 zum Ermitteln 43 des Soll-Lenkwinkels 39 kann eine Güte des Ermittelns 43 vorzugsweise verbessert werden. Der beim Ermitteln 43 prognostizierte Soll-Lenkwinkel 39 kommt einem Lenkwinkel näher, der eingestellt werden muss, damit das Fahrzeug 300 dem Pfad 5 ideal folgt.

In der Fahrsituation 15 steuert die autonome Einheit 308 das Fahrzeug 300 durch Bereitstellen der Lenksignale 332 auf dem Fahrzeugnetzwerk 324. In der Fahrsituation 15, also während das Fahrzeug 300 im Ausführungsbeispiel gemäß Fig. 2a die Kurve 336 durchfährt, wird so der Ist-Lenkwinkel 9 an den gelenkten Vorderrädern 318a, 318b des Fahrzeugs 300 ausgesteuert. Neben der Lenkung 312 empfängt auch die Steuereinheit 202 die Lenksignale 332 und verwendet diese zu einem Ermitteln 49 des in der Fahrsituation 15 tatsächlich ausgesteuerten Ist-Lenkwinkels 9. Aus dem ermittelten Ist-Lenkwinkel 9 und dem zuvor ermittelten Soll-Lenkwinkel 39 ermittelt die Steuereinheit 202 in einem weiteren Schritt des Verfahrens, das in Fig. 3 als Ermitteln 51 dargestellt ist, eine Lenkwinkelabweichung 53 zwischen dem Soll-Lenkwinkel 39 und dem Ist-Lenkwinkel 9, Die Lenkwinkelabweichung 53 wird hier einfach als Differenz zwischen Soll-Lenkwinkel 39 und Ist-Lenkwinkel 9 ermittelt.

Bei einem anschließenden Bereitstellen 55 wird ein zur Lenkwinkelabweichung 53 korrespondierender Lenkwinkeltoleranzwert 57 bereitgestellt. Hier erfolgt das Bereitstellen 55 erst nach dem Ermitteln 51 der Lenkwinkelabweichung 53. Es soll jedoch verstanden werden, dass der Lenkwinkeltoleranzwert 57 auch vor dem Ermitteln 51 der Lenkwinkelabweichung 53, dem Ermitteln 49 des Ist-Lenkwinkels 9, dem Ermitteln 43 des Soll-Lenkwinkels 39 und/oder dem Ermitteln 41 der Trajektorie 3 durchgeführt werden kann. Der bereitgestellte Lenkwinkeltoleranzwert 57 und die ermittelte Lenkwinkelabweichung 53 werden anschließend von der Steuereinheit 202 bei einem Früherkennen 6 einer Instabilität 13 des Fahrzeugs 300 verwendet. In der in Fig. 2a illustrierten Fahrsituation 15 ist der Ist-Lenkwinkel 9 des Fahrzeugs 300 zu gering, um dem Verlauf der Kurve 336 vom Kurveneingang 338 zum Kurvenausgang 342 zu folgen. Mittels des vorbeschriebenen Verfahrens 1 kann die Steuereinheit 202 die auftretende Instabilität 13, die in Fig. 2a das Untersteuern 17 des Fahrzeugs 300 ist, frühermitteln.

Fig. 4 illustriert einen Verlauf einer Krümmung des Pfads 5, des Soll-Lenkwinkels 39, des Ist-Lenkwinkels 9, der Querablage 25 und des Richtungsfehlers 31 entlang des Verlaufs der Kurve 336 während der Fahrsituation 15 im Detail, wobei das Fahrzeug 300 vor und nach der Kurve 336 je einen geraden Streckenabschnitt 360 befährt. Die Krümmung des Pfads 5 ist das Inverse des Krümmungsradius 354. Der Kurveneingang 338 und der Kurvenausgang 342 sind in Fig. 4 gekennzeichnet, wobei die Krümmung des Pfads 5 bzw. der Kurve 336 vor dem Kurveneingang 338 und nach dem Kurvenausgang 342 gleich null sind. Im vor der Kurve 336 liegenden geraden Streckenabschnitt 360 sind der Ist-Lenkwinkel 9 und der Soll-Lenkwinkel 39 ebenfalls etwa gleich null. Auch die Querablage 25 und der Richtungsfehler 31 des Fahrzeugs 300 sind im vor der Kurve 336 liegenden geraden Streckenabschnitt 360 in etwa gleich null. Kleine Schwankungen der Querablage 25 und des Richtungsfehlers 31 in den geraden Abschnitten 360 resultieren aus Fehlermittlungen der Fahrzeugposition 21 und gegebenenfalls Korrekturen der autonomen Einheit 308. Am Kurveneingang 336 nimmt der Ist-Lenkwinkel 9 in etwa gleichförmig mit dem Soll-Lenkwinkel 39 zu. Die autonome Einheit 308 steuert mittels der Lenkung 312 den Ist-Lenkwinkel 9 aus, um das Fahrzeug 300 entlang des Pfads 5 zu führen. Wie bereits beschrieben wurde, gelingt dies der autonomen Einheit 308 beim Untersteuern 17 gemäß Fig. 2a jedoch nicht, sodass sich eine Soll-Ist-Abweichung 37 einstellt. Diese Soll-Ist-Abweichung 37 ist hier durch die ausgehend vom Kurveneingang 338 zunehmende Querablage 25 und den Richtungsfehler 31 gekennzeichnet. Da der dem Soll-Lenkwinkel 39 entsprechende Ist-Lenkwinkel 9 nicht ausreicht, um das Fahrzeug entlang des Pfads 5 zu führen, erhöht die autonome Einheit 308 mittels der Lenkung 312 den Ist-Lenkwinkel 9, sodass sich eine Lenkwinkelabweichung 53 einstellt. Durch den erhöhten Ist-Lenkwinkel 9 kann das Fahrzeug 300 dem Verlauf der Kurve 336 besser folgen und die Soll-Ist-Abweichung 37 zwischen der Fahrzeugposition 21 und dem Pfad 5 der Trajektorie 3 nimmt hin zum Kurvenausgang 342 ab. Der Ist-Lenkwinkel 9 kann reduziert werden, sodass auch die Lenkwinkelabweichung 53 zwischen Kurvenscheitel 340 und Kurvenausgang 342 zurückgeht. Im Gegensatz zur Fahrsituation 15, die in Fig. 2a dargestellt ist, befindet sich das Fahrzeug 300 am Kurvenausgang 342 wieder in korrekter Ausrichtung auf dem Pfad 5, sodass die Querablage 25 und der Richtungsfehler 31 in etwa einen Wert von null haben. Das Erhöhen des Ist-Lenkwinkels 9 durch die autonome Einheit 308 hat hier also ausgereicht, um das Fahrzeug 300 durch die Kurve 336 zu steuern, wobei zwischenzeitlich erheblichen Soll-Ist-Abweichungen 37 vorlagen.

Fig. 4 illustriert ferner das Früherkennen 59 der Instabilität 13. Sobald die Lenkwinkelabweichung 53 größer ist als der Lenkwinkeltoleranzwert 57 ermittelt die Steuereinheit 202 eine sich anbahnende Instabilität 13. Der Vergleich zwischen Lenkwinkeltoleranzwert 57 und Lenkwinkelabweichung 53 erfolgt hier betragsbasiert. Das Verfahren 1 ist sowohl für die gezeigte Linkskurve 336 als auch für Rechtskurven anwendbar. Die Instabilität 13 des Fahrzeugs 300 kann frühzeitig ermittelt werden, obwohl sich beim Früherkennen 59 (steigende Flanke des in Fig. 4 dargestellten Verlaufs) nur eine kleine Soll-Ist-Abweichung 37 eingestellt hat. Die Steuereinheit 202 kann die Instabilität 13 so bereits frühzeitig erkennen.

Ohne zusätzlichen Eingriff des Fahrerassistenzsystems 200 nimmt die Soll-Ist-Abweichung 37 dennoch erhebliche Werte an, da die autonome Einheit 308 im Beispiel gemäß Fig. 4 nur auf die Soll-Ist-Abweichung 37 reagiert, die erst nach dem Frühermitteln 59 Werte annimmt, die die autonome Einheit 308 zu einer Reaktion veranlassen. Ein sicherer Betrieb des Fahrzeugs 300 ist gefährdet. Die Steuereinheit 202 ist daher dazu ausgebildet in Antwort auf das Früherkennen 59 der Instabilität 13 (des Untersteuerns 17 in Fig. 2a) einen Fahrdynamikeingriff 61 auszuführen (Ausführen 63 in Fig. 3). Der Fahrdynamikeingriff 61 ist im vorliegenden Ausführungsbeispiel ein Bremseingriff 65. Beim Bremseingriff 65 werden für das Untersteuern 17 die kurveninneren Räder (Räder 318a, 318c in Fig. 1) gebremst. Vorzugsweise wird insbesondere das kurveninnere Hinterrad 318c gebremst, da so Rückwirkungen auf die Lenkung 312 des Fahrzeugs 300 verhindert werden können. Zum Durchführen des Bremseingriffs 65 stellt die Steuereinheit 202 des Fahrerassistenzsystems 200 entsprechende Bremssignale 326 auf dem Fahrzeugnetzwerk 324 bereit. Der Bremsmodulator 322 steuert daraufhin mittels der Bremsaktuatoren 320 einen Bremsschlupf an den kurveninneren Rädern 318 aus. Der Bremseingriff 65 kann analog zu einem Regelsystemeingriff des Stabilitätsregelsystem 350 durch die Pfeile 352 illustriert werden, erfolgt jedoch früher. Der Bremseingriff 65 bzw. die dadurch bedingte Verzögerung der kurveninneren Räder 318 bewirkt ein Giermoment des Fahrzeugs 300 in Richtung der Kurve 336, das den Richtungsfehler 31 zumindest teilweise kompensiert.

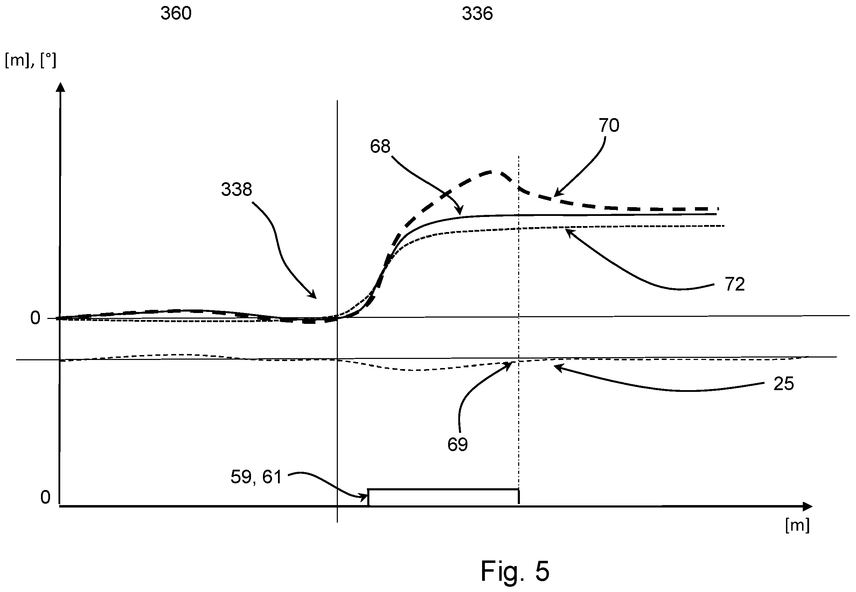

Fig. 5 illustriert die Wirkung des Bremseingriffs 65 auf ein Fahrzeug 300, da beim Befahren der Kurve 336 zum Untersteuern 17 neigt. So zeigt Fig. 5 einen Verlauf 68 des Ist-Lenkwinkels 9, der an dem Fahrzeug 300 ausgesteuert werden muss, wenn in der Fahrsituation 15 der Fahrdynamikeingriff 61 durchgeführt wird. Zudem zeigt Fig. 5 einen Referenzverlauf 70 des Ist-Lenkwinkels für den Fall, dass das Fahrzeug 300 allein durch die Lenkung 312 entlang des Pfads 5 geführt wird (d.h. eine Fahrsituation 15 ohne Fahrdynamikeingriff 61). Der Verlauf 68 des Ist-Lenkwinkels 9 mit Fahrdynamikeingriff 61 ist sehr nahe an einem kinematischen Lenkwinkel 72 eines neutralen Fahrzeugs 300, das weder untersteuert noch übersteuert. Im Wesentlichen zeitgleich zum Früherkennen 59 veranlasst die Steuereinheit 202 den Bremseingriff 65 bzw. das Ausführen 63 des Fahrdynamikeingriffs 61, wodurch das Untersteuern 17 kompensiert wird. In Folge des Bremseingriffs 65 wird ein zusätzliches Giermoment für das Fahrzeug 300 erzeugt, sodass der Ist-Lenkwinkel 9 ausreicht, um das Fahrzeug 300 entlang des Pfads 5 zu führen. Im Vergleich zur Fahrsituation 15 ohne Fahrdynamikeingriff 61 (Fig. 4) ist der Verlauf der Querablage 25 für die Fahrsituation 15 mit Bremseingriff 65 erheblich flacher. Es stellt sich aufgrund des Fahrdynamikeingriffs 61 also eine erheblich geringere Querablage 25 ein, wodurch ein Zugewinn an Sicherheit erreicht wird. Vorzugsweise ist eine Intensität des Bremseingriffs 65 proportional zu einem Betrag der Soll-Ist-Abweichung 37. So können beispielsweise beim Untersteuern 17 die kurveninneren Räder 318 umso stärker gebremst werden, je größer die Querablage 25 des Fahrzeugs 300 von dem Pfad 5 ist.

Durch den Fahrdynamikeingriff 61 wird die Soll-Ist-Abweichung 37 kompensiert bzw. ausgeglichen. Fig. 5 illustriert daher ferner ein Beenden 67 des Fahrdynamikeingriffs 61, das durchgeführt wird, sobald die Soll-ist-Abweichung 37 eine Positionstoleranzgrenze 69 erreicht. Der Bremseingriff 65 wird hier beendet, sobald die Querablage 25 die Positionstoleranzgrenze 69 erreicht. Der Fahrdynamikeingriff 61 kann aber auch beendet werden, falls die Lenkwinkelabweichung 53 eine Stabilitätsgrenze 71 erreicht. Dieses Beenden 73 ist in Fig. 3 ebenfalls illustriert.

In bevorzugten Varianten des Verfahrens 1 erfolgt das Früherkennen 59 nur dann, wenn zusätzlich zur den Lenkwinkeltoleranzwert übersteigenden Lenkwinkelabweichung 53 auch eine Soll-Ist-Abweichung 37 vorliegt, die einen Trajektorientoleranzwert 75 verletzt. Ferner kann vorgesehen sein, dass das Früherkennen 59 nur dann erfolgt, wenn eine Trajektorienabweichungsänderungsrate 77, die den zeitlichen Verlauf der Soll-Ist-Abweichung 37 kennzeichnet, eine zunehmende Soll-Ist-Abweichung 37 kennzeichnet, wie dies in Fig. 4 zwischen Kurveneingang 338 und Kurvenscheitel 340 der Fall ist. Die autonome Einheit 308 stellt im vorliegenden Ausführungsbeispiel kontinuierlich Signale auf dem Fahrzeugnetzwerk 324 bereit, die die Fahrzeugposition 21 repräsentieren. Basierend auf diesen Signalen führt die Steuereinheit 202 ein Überwachen 79 der Soll-Ist-Abweichung 37 durch und ermittelt bei einem Ermitteln 81 die Trajektorienabweichungsänderungsrate 77. Durch das zusätzliche Berücksichtigen des Trajektorientoleranzwerts 75 und der Trajektorienabweichungsänderungsrate 77, die in Fig. 3 ebenfalls verdeutlicht sind, können Fehlermittlungen von Instabilitäten 13 verhindert werden.

Auch wenn das Verfahren 1 vorstehend für ein Untersteuern 17 des Fahrzeugs 300 erläutert wurde, soll verstanden werden, dass auch für ein Übersteuern 19 oder ein Ausweichmanöver des Fahrzeugs 300 eine Soll-Ist-Abweichung 37 des Fahrzeugs 300 in der Fahrsituation 15 reduziert werden kann. Beim Übersteuern 19 wird beim Bremseingriff 65 vorzugsweise das kurvenäußere Vorderrad des Fahrzeugs 300, das für die Linkskurve gemäß Fig. 2b das rechte Vorderrad 318b des Fahrzeugs 300 ist, verzögert. Ferner kann zusätzlich oder alternativ zum Bremseingriff beispielsweise auch eine Motormomentenlimitierung 83 durchgeführt werden, bei der ein von dem Antriebsmotor 314 des Fahrzeugs 300 bereitstellbares Motormoment limitiert wird.

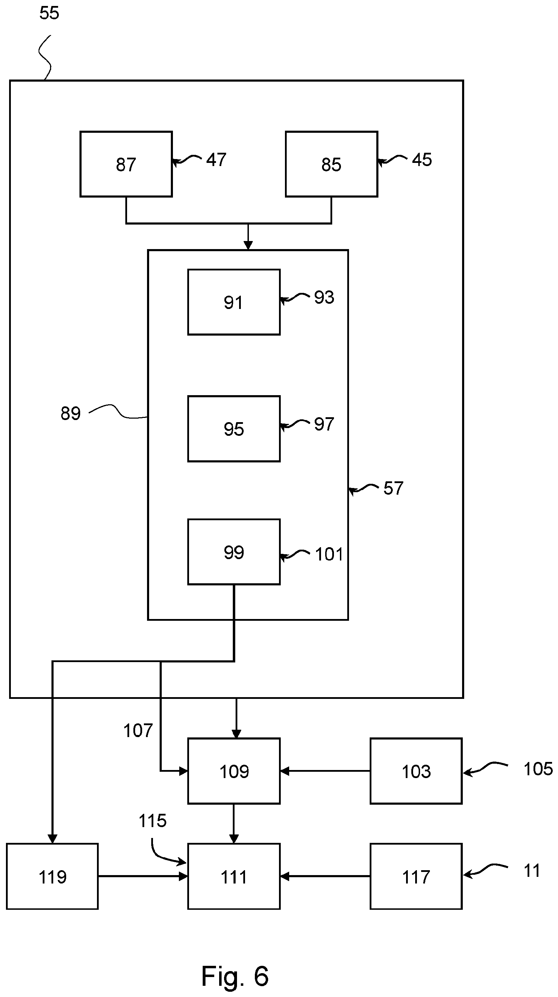

Fig. 6 illustriert das Bereitstellen 55 des Lenkwinkeltoleranzwerts 57 weiter, das im gezeigten Ausführungsbeispiel ein Ermitteln 85 zumindest einer geometrischen Charakteristik 45 der gegenwärtigen Fahrzeugkonfiguration 4, ein Ermitteln 87 einer Lastcharakteristik 47 der gegenwärtigen Fahrzeugkonfiguration 4 und ein Definieren 89 des Lenkwinkeltoleranzwerts 57 unter Verwendung der geometrischen Charakteristik 45 und der Lastcharakteristik 47. Zum Definieren 89 des Lenkwinkeltoleranzwerts 57 ermittelt die Steuereinheit 202 des Fahrerassistenzsystems 200 hier bei einem Ermitteln 91 unter Verwendung mehrere Lastcharakteristika 47 und mehrerer geometrischer Charakteristika 45 eine Massenverteilung 93 des Fahrzeugs 300. Die Massenverteilung 93 und die geometrischen Charakteristika 45 nutzt die Steuereinheit 202 zum einem Modellieren 95 des Fahrzeugs 300 in der gegenwärtigen Fahrzeugkonfiguration 4. Beim Modellieren 95 generiert die Steuereinheit 202 ein individualisiertes Fahrzeugmodell 97 des Fahrzeugs 300 aus einem Fahrzeuggrundmodell, wobei die geometrischen Charakteristika 45, die Lastcharakteristika 47 und die Massenverteilung 93 Parameter des Modells sind. Das Modell verwendet die Steuereinheit 202 dann für eine Prädiktion 99 von dynamischen Eigenschaften 101 des Fahrzeugs 300, die die Steuereinheit 202 dann zum Definieren 89 des Lenkwinkeltoleranzwerts 57 verwendet.

Nach dem Bereitstellen 55 steht der Lenkwinkeltoleranzwerts 57 zur Verfügung. Dieser kann unmittelbar zum Früherkennen 59 einer Instabilität 13 genutzt werden. Es kann aber in bevorzugten Ausgestaltungen auch vorgesehen sein, dass der Lenkwinkeltoleranzwert 57 in Abhängigkeit weiterer Parameter angepasst wird, bevor dieser beim Früherkennen 59 einer Instabilität 13 mit der Lenkwinkelabweichung 53 abgeglichen wird. Im Ausführungsbeispiel gemäß Fig. 5 wird hierfür ein Ermitteln 103 einer Lenkoszillation 105 durchgeführt. Die Steuereinheit 202 des Fahrerassistenzsystems 200 überwacht hierfür einen zeitlichen Verlauf des Ist-Lenkwinkels 9. Die dynamischen Eigenschaften 101 des Fahrzeugs 202 umfassen auch Eigenfrequenzbänder 103 des Fahrzeugs 300. Falls die ermittelte Lenkoszillation 105 innerhalb eines der ermittelten Eigenfrequenzbänder 103 liegt, dann führt die Steuereinheit 202 ein Herabsetzen 109 des Lenkwinkeltoleranzwerts 57 aus. Der Lenkwinkeltoleranzwerts 57 wird beim Herabsetzen 107 reduziert, sodass eine Instabilität 13 früher erkannt wird. Vorzugsweise kann ein Warnsignal ausgegeben und/oder eine Fahrdynamikeingriff vorgenommen werden, falls die ermittelte Lenkoszillation 105 innerhalb eines der ermittelten Eigenfrequenzbänder 103 liegt.

Der Lenkwinkeltoleranzwert 57 kann auch herabgesetzt werden (Herabsetzen 111 in Fig. 6), falls der Ist-Knickwinkel 11 einen Soll-Knickwinkel 113 um einen Knickwinkeltoleranzwert 115 überschreitet. Der Ist-Knickwinkel 11 und der Soll-Knickwinkel 113 werden hierfür vorab ermittelt. Zum Ermitteln 117 des Ist-Knickwinkels 11 verwendet die Steuereinheit 202 Knickwinkelsignale, die von einem in den Figuren nicht dargestellten Knickwinkelsensor auf dem Fahrzeugnetzwerk 324 bereitgestellt werden. Das Ermitteln 119 des Soll-Knickwinkels 113 erfolgt ebenfalls durch die Steuereinheit 202, wobei diese hier auf die bei der Prädiktion 99 ermittelten dynamischen Eigenschaften 101 des Fahrzeugs 300 zurückgreift. Nach dem Herabsetzen 109 und dem Herabsetzen 111 wird der Lenkwinkeltoleranzwert 57 zum Frühermitteln 59 verwendet. Instabilitäten 13 des Fahrzeugs 300 können so noch früher erkannt werden.

Das Verfahren 1 wurde vorstehend zur Illustration anhand der Steuereinheit 202 des Fahrerassistenzsystems 200 erläutert. Es soll jedoch verstanden werden, dass das Verfahren 1 nicht von der Steuereinheit 202 durchgeführt werden muss. Insbesondere kann das Verfahren 1 oder einzelne Schritte des Verfahrens 1 auch von der autonomen Einheit 308, einer Hauptsteuereinheit des Fahrzeugs 300 oder einer Lenksteuereinheit der Lenkung 312 durchgeführt werden.

### Bezugszeichen (Teil der Beschreibung)

- 1: Fahrzeugsteuerverfahren
- 3: Trajektorie
- 4: gegenwärtige Fahrzeugkonfiguration
- 5: Pfad
- 7: Soll-Geschwindigkeit
- 9: Ist-Lenkwinkel
- 11: Ist-Knickwinkel
- 13: Instabilitäten
- 15: Fahrsituation
- 17: Untersteuern
- 19: Übersteuern
- 21: Fahrzeugposition
- 23: Sollposition
- 25: Querablage
- 27: Ist-Gierrate
- 29: Soll-Gierrate
- 31: Richtungsfehler
- 33: Ist-Ausrichtung
- 35: Sollausrichtung
- 37: Soll-Ist-Abweichung
- 39: Soll-Lenkwinkel
- 41: Ermitteln der Trajektorie
- 43: Ermitteln des Soll-Lenkwinkels
- 45: geometrische Charakteristik
- 47: Lastcharakteristik
- 49: Ermitteln des Ist-Lenkwinkels
- 51: Ermitteln einer Lenkwinkelabweichung
- 53: Lenkwinkelabweichung
- 55: Bereitstellen eines Lenkwinkeltoleranzwerts
- 57: Lenkwinkeltoleranzwert
- 59: Früherkennen einer Instabilität
- 61: Fahrdynamikeingriff
- 63: Ausführen des Fahrdynamikeingriffs
- 65: Bremseingriff
- 67: Beenden des Fahrdynamikeingriffs bei Erreichen einer Positionstoleranzgrenze
- 68: Verlauf des Ist-Lenkwinkels in einer Fahrsituation, in der ein Fahrdynamikeingriff ausgeführt wird
- 69: Positionstoleranzgrenze
- 70: Referenzverlauf des Ist-Knickwinkels für die Fahrsituation ohne Fahrdynamikeingriff
- 71: Stabilitätsgrenze
- 72: kinematischer Lenkwinkel
- 73: Beenden des Fahrdynamikeingriffs bei Erreichen einer Stabilitätsgrenze
- 75: Trajektorientoleranzwert
- 77: Trajektorienabweichungsänderungsrate
- 79: Überwachen der Soll-Ist-Abweichung
- 81: Ermitteln der Trajektorienabweichungsänderungsrate
- 83: Motormomentenlimitierung
- 85: Ermitteln einer geometrischen Charakteristik
- 87: Ermitteln einer Lastcharakteristik
- 89: Definieren des Lenkwinkeltoleranzwerts
- 91: Ermitteln einer Masseverteilung
- 93: Masseverteilung
- 95: Modellieren
- 97: Fahrzeugmodell
- 99: Prädiktion dynamischer Eigenschaften
- 101: dynamische Eigenschaften
- 103: Ermitteln einer Lenkoszillation
- 105: Lenkoszillation
- 107: Eigenfrequenzband
- 109: Herabsetzen des Lenkwinkeltoleranzwerts in Folge einer Lenkoszillation
- 111: Herabsetzen des Lenkwinkeltoleranzwerts in Folge eines zu großen Knickwinkels
- 113: Soll-Knickwinkel
- 115: Knickwinkeltoleranzwert
- 117: Ermitteln des Ist-Knickwinkels
- 119: Ermitteln des Soll-Knickwinkels
- 200: Fahrerassistenzsystem
- 202: Steuereinheit
- 204: Schnittstelle
- 300: Fahrzeug
- 302: Fahrzeugzug
- 304: Zugfahrzeug
- 306: Anhängerfahrzeug
- 308: autonome Einheit
- 310: Fahrzeugaktuatoren
- 312: Lenkung
- 314: Antriebsmotor
- 316: Bremssystem
- 318: Räder
- 318a: linkes Vorderrad
- 318b: rechtes Vorderrad
- 318c: linkes Hinterrad
- 320: Bremsaktuator
- 322: Bremsmodulator
- 324: Fahrzeugnetzwerk
- 326: Bremssignale
- 328: Vorderachse
- 330: Positionsregler
- 332: Lenksignale
- 334: Deichsel
- 336: Kurve
- 338: Kurveneingang
- 340: Kurvenscheitel
- 342: Kurvenausgang
- 344: Fahrtrichtung
- 346: Front
- 348: Heck
- 350: Stabilitätsregelsystem
- 352: Verzögerung
- 354: Krümmungsradius
- 356: Radstand des Zugfahrzeugs
- 358: Schwerpunkt des Zugfahrzeugs
- 360: gerader Abschnitt

## Patentansprüche

1. Verfahren (1) zum Steuern eines Fahrzeugs (300) in einer Fahrsituation (15), aufweisend:
- Ermitteln (41) einer Trajektorie (3) des Fahrzeugs (300) für die Fahrsituation (15);
- Ermitteln (43) eines Soll-Lenkwinkels (39) basierend auf der Trajektorie (3);
- Ermitteln (49) eines Ist-Lenkwinkels (9) des Fahrzeugs (300) in der Fahrsituation (15);
- Ermitteln (51) einer Lenkwinkelabweichung (53) zwischen dem ermittelten Soll-Lenkwinkel (39) und dem ermittelten Ist-Lenkwinkel (9);
- Bereitstellen (55) eines Lenkwinkeltoleranzwerts (57) für die Lenkwinkelabweichung (53);
- Früherkennen (59) einer Instabilität (13) des Fahrzeugs (300), falls die ermittelte Lenkwinkelabweichung (53) den Lenkwinkeltoleranzwert (57) verletzt; und in Antwort auf das Früherkennen (59) einer Instabilität (13) des Fahrzeugs (300):
- Ausführen (63) zumindest eines Fahrdynamikeingriffs (61) unter Verwendung zumindest eines Fahrzeugaktuators (310) des Fahrzeugs (300), um der Instabilität (13) des Fahrzeugs (300) entgegenzuwirken, **gekennzeichnet durch**
- Ermitteln einer Fahrzeugposition (21) des Fahrzeugs (300) in der Fahrsituation (15); und
- Ermitteln einer Soll-Ist-Abweichung (37) zwischen der Fahrzeugposition (21) und der Trajektorie (3), und wobei eine Intensität des Fahrdynamikeingriffs (61) proportional zu einem Betrag der Soll-Ist-Abweichung (37) ist.

2. Verfahren (1) nach Anspruch 1, ferner aufweisend:
- Bereitstellen eines Trajektorientoleranzwerts für die Soll-Ist-Abweichung (); wobei das Früherkennen (23) einer Instabilität des Fahrzeugs (300) nur erfolgt, falls die ermittelte Lenkwinkelabweichung (17) den Lenkwinkeltoleranzwert (21) verletzt und die Soll-Ist-Abweichung den Trajektorientoleranzwert () verletzt.

3. Verfahren (1) nach einem der Ansprüche 1 oder 2, ferner aufweisend:
- Überwachen (79) der Soll-Ist-Abweichung (37), wobei die Soll-Ist-Abweichung (37) beim Überwachen (79) kontinuierlich oder an mehreren aufeinanderfolgenden Zeitpunkten ermittelt wird;
- Ermitteln (81) einer Trajektorienabweichungsänderungsrate (77), wobei das Früherkennen (59) einer Instabilität (13) des Fahrzeugs (300) nur erfolgt, falls die Trajektorienabweichungsänderungsrate (77) eine zunehmende Soll-Ist-Abweichung (37) der Fahrzeugposition (21) von der Trajektorie (3) kennzeichnet.

4. Verfahren nach einem der Ansprüche 1 bis 3, wobei der Fahrdynamikeingriff (61) die Soll-Ist-Abweichung (37) zumindest teilweise kompensiert.

5. Verfahren (1) nach Anspruch 4, ferner aufweisend:
- Beenden (67) des Fahrdynamikeingriffs (61), falls die Soll-Ist-Abweichung (37) eine Positionstoleranzgrenze (69) erreicht oder unterschreitet.

6. Verfahren (1) nach einem der Ansprüche 1 bis 4, ferner aufweisend:
- Beenden (73) des Fahrdynamikeingriffs (61), falls die Lenkwinkelabweichung (53) eine Stabilitätsgrenze (71) erreicht oder unterschreitet.

7. Verfahren (1) nach einem der Ansprüche 1 bis 6, wobei das Bereitstellen (55) eines Lenkwinkeltoleranzwert (57) für die Lenkwinkelabweichung (53) aufweist:
- Ermitteln (85) zumindest einer geometrischen Charakteristik (45) einer gegenwärtigen Fahrzeugkonfiguration (4) des Fahrzeugs (300);
- Ermitteln (87) zumindest einer Lastcharakteristik (47) der gegenwärtigen Fahrzeugkonfiguration (4);
- Definieren (89) des Lenkwinkeltoleranzwerts (57) für die Lenkwinkelabweichung (53) unter Verwendung der geometrischen Charakteristik (45) und der Lastcharakteristik (47).

8. Verfahren (1) nach einem der Ansprüche 1 bis 7, wobei der Fahrdynamikeingriff (61) ein Bremseingriff (65) an einer oder mehreren Radbremsen des Fahrzeugs (300), eine Motormomentenlimitierung (83) eines Motors (314) des Fahrzeugs (300), ein Bereitstellen asymmetrischer Antriebsmomente an Rädern (318) des Fahrzeugs (300) und/oder ein Bereitstellen eines unterstützenden Lenkmoments mittels einer lenkbaren Hinterachse des Fahrzeugs (300) ist.

9. Verfahren (1) nach einem der Ansprüche 1 bis 8, ferner aufweisend:
- Ermitteln (103) einer Lenkoszillation (105) unter Verwendung eines Zeitverlaufs des Ist-Lenkwinkels (9); und in Antwort auf das Ermitteln (103) einer Lenkoszillation (105):
- Herabsetzen (109) des Lenkwinkeltoleranzwerts (57), falls eine Lenkoszillation (105) ermittelt wird, die in einem Eigenfrequenzband (107) des Fahrzeugs (300) liegt.

10. Verfahren (1) nach einem der Ansprüche 1 bis 9, ferner aufweisend:
- Ermitteln (117) eines Ist-Knickwinkels (11) zwischen einem Zugfahrzeug (304) und einem Anhängerfahrzeug (306) des Fahrzeugs (300);
- Ermitteln (119) eines Soll-Knickwinkels (113) unter Verwendung der Trajektorie (3); und
- Herabsetzen (111) des Lenkwinkeltoleranzwerts (21), falls der Ist-Knickwinkel (11) den Soll-Knickwinkel (113) um einen Knickwinkeltoleranzwert (115) überschreitet.

11. Fahrerassistenzsystem (200) zum Verbessern einer Trajektorientreue eines Fahrzeugs (300) in einer Fahrsituation (15), aufweisend eine Steuereinheit (202), wobei das Fahrerassistenzsystem (200) dazu ausgebildet ist, das Verfahren (1) gemäß einem der vorstehenden Ansprüche 1 bis 10 durchzuführen.

12. Fahrzeug (300), aufweisend zumindest einen Fahrzeugaktuator (310) und ein Fahrerassistenzsystem (200) nach Anspruch 11.

13. Computerprogrammprodukt mit Programmcode-Mitteln, die auf einem computerlesbaren Datenträger gespeichert sind, und die das Verfahren (1) nach einem der Ansprüche 1 bis 10 ausführen, wenn das Computerprogrammprodukt auf einer Recheneinheit ausgeführt wird.

## Claims

1. Method (1) for controlling a vehicle (300) in a driving situation (15), comprising:
- determining (41) a trajectory (3) of the vehicle (300) for the driving situation (15);
- determining (43) a target steering angle (39) on the basis of the trajectory (3);
- determining (49) an actual steering angle (9) of the vehicle (300) in the driving situation (15);
- determining (51) a steering angle deviation (53) between the determined target steering angle (39) and the determined actual steering angle (9);
- providing (55) a steering angle tolerance value (57) for the steering angle deviation (53);
- early detection (59) of an instability (13) of the vehicle (300) if the determined steering angle deviation (53) violates the steering angle tolerance value (57);
and in response to the early detection (59) of an instability (13) of the vehicle (300):
- performing (63) at least one driving dynamics intervention (61) using at least one vehicle actuator (310) of the vehicle (300) to counteract the instability (13) of the vehicle (300),
**characterized by**
- determining a vehicle position (21) of the vehicle (300) in the driving situation (15); and
- determining a target-actual deviation (37) between the vehicle position (21) and the trajectory (3), and
the intensity of the driving dynamics intervention (61) being proportional to the amount of the target-actual deviation (37).

2. Method (1) according to claim 1, further comprising:
- providing a trajectory tolerance value for the target-actual deviation (); wherein the early detection (23) of an instability of the vehicle (300) only occurs if the determined steering angle deviation (17) violates the steering angle tolerance value (21) and the target-actual deviation violates the trajectory tolerance value ().

3. Method (1) according to either of claims 1 or 2, further comprising:
- monitoring (79) the target-actual deviation (37), wherein the target-actual deviation (37) is determined continuously or at multiple successive time points during the monitoring (79);
- determining (81) a trajectory deviation change rate (77), wherein the early detection (59) of an instability (13) of the vehicle (300) only occurs if the trajectory deviation change rate (77) indicates an increasing target-actual deviation (37) of the vehicle position (21) from the trajectory (3).

4. Method according to any of claims 1 to 3, wherein the driving dynamics intervention (61) at least partially compensates for the target-actual deviation (37).

5. Method (1) according to claim 4, further comprising:
- terminating (67) the driving dynamics intervention (61) if the target-actual deviation (37) reaches or remains below a position tolerance limit (69).

6. Method (1) according to any of claims 1 to 4, further comprising:
- terminating (73) the driving dynamics intervention (61) if the steering angle deviation (53) reaches or remains below a stability limit (71).

7. Method (1) according to any of claims 1 to 6, wherein the providing (55) of a steering angle tolerance value (57) for the steering angle deviation (53) comprises:
- determining (85) at least one geometric characteristic (45) of a current vehicle configuration (4) of the vehicle (300);
- determining (87) at least one load characteristic (47) of the current vehicle configuration (4);
- defining (89) the steering angle tolerance value (57) for the steering angle deviation (53) using the geometric characteristic (45) and the load characteristic (47).

8. Method (1) according to any of claims 1 to 7, wherein the driving dynamics intervention (61) is a brake intervention (65) on one or more wheel brakes of the vehicle (300), a motor torque limitation (83) of a motor (314) of the vehicle (300), a provision of asymmetric drive torques to wheels (318) of the vehicle (300) and/or a provision of a supporting steering torque by means of a steerable rear axle of the vehicle (300).

9. Method (1) according to any of claims 1 to 8, further comprising:
- determining (103) a steering oscillation (105) using a time history of the actual steering angle (9); and
in response to the determining (103) of a steering oscillation (105):
- lowering (109) the steering angle tolerance value (57) if a steering oscillation (105) is determined which lies within a natural frequency band (107) of the vehicle (300).

10. Method (1) according to any of claims 1 to 9, further comprising:
- determining (117) an actual articulation angle (11) between a towing vehicle (304) and a trailer vehicle (306) of the vehicle (300);
- determining (119) a target articulation angle (113) using the trajectory (3); and
- lowering (111) the steering angle tolerance value (21) if the actual articulation angle (11) exceeds the target articulation angle (113) by an articulation angle tolerance value (115).

11. Driver assistance system (200) for improving trajectory fidelity of a vehicle (300) in a driving situation (15), comprising a control unit (202), wherein the driver assistance system (200) is configured to perform the method (1) according to any of the preceding claims 1 to 10.

12. Vehicle (300) comprising at least one vehicle actuator (310) and a driver assistance system (200) according to claim 11.

13. Computer program product comprising program code means stored on a computer-readable data carrier, which execute the method (1) according to any of claims 1 to 10 when the computer program product is executed on a computing unit.

## Revendications

1. Procédé (1) pour la commande d'un véhicule (300) dans une situation de conduite (15), présentant :
- la détermination (41) d'une trajectoire (3) du véhicule (300) pour la situation de conduite (15) ;
- la détermination (43) d'un angle de braquage de consigne (39) sur la base de la trajectoire (3) ;
- la détermination (49) d'un angle de braquage réel (9) du véhicule (300) dans la situation de conduite (15) ;
- la détermination (51) d'un écart d'angle de braquage (53) entre l'angle de braquage de consigne (39) déterminé et l'angle de braquage réel (9) déterminé ;
- la fourniture (55) d'une valeur de tolérance d'angle de braquage (57) pour l'écart d'angle de braquage (53) ;
- la reconnaissance précoce (59) d'une instabilité (13) du véhicule (300) si l'écart d'angle de braquage (53) déterminé ne correspond pas à la valeur de tolérance d'angle de braquage (57) ;
et, en réponse à la reconnaissance précoce (59) d'une instabilité (13) du véhicule (300) :
- la réalisation (63) d'au moins une intervention sur la dynamique de conduite (61) à l'aide d'au moins un actionneur de véhicule (310) du véhicule (300) afin de contrer l'instabilité (13) du véhicule (300),
**caractérisé par**
- la détermination d'une position de véhicule (21) du véhicule (300) dans la situation de conduite (15) ; et
- la détermination d'un écart valeur de consigne-valeur réelle (37) entre la position de véhicule (21) et la trajectoire (3), et
dans lequel une intensité de l'intervention sur la dynamique de conduite (61) est proportionnelle à un montant de l'écart valeur de consigne-valeur réelle (37).

2. Procédé (1) selon la revendication 1, présentant en outre :
- la fourniture d'une valeur de tolérance de trajectoire pour l'écart valeur de consigne-valeur réelle () ; dans lequel la reconnaissance précoce (23) d'une instabilité du véhicule (300) est effectuée uniquement si l'écart d'angle de braquage (17) déterminé ne correspond pas à la valeur de tolérance d'angle de braquage (21) et si l'écart valeur de consigne-valeur réelle ne correspond pas à la valeur de tolérance de trajectoire ().

3. Procédé(1) selon l'une des revendications 1 ou 2, présentant en outre :
- la surveillance (79) de l'écart valeur de consigne-valeur réelle (37), dans lequel l'écart valeur de consigne-valeur réelle (37) est déterminé de manière continue ou à plusieurs moments successifs lors de la surveillance (79) ;
- la détermination (81) d'un taux de variation d'écart de trajectoire (77), dans lequel la reconnaissance précoce (59) d'une instabilité (13) du véhicule (300) est effectuée uniquement si le taux de variation d'écart de trajectoire (77) caractérise un écart valeur de consigne-valeur réelle (37) croissant entre la position de véhicule (21) et la trajectoire (3).

4. Procédé selon l'une des revendications 1 à 3, dans lequel l'intervention sur la dynamique de conduite (61) compense au moins partiellement l'écart valeur de consigne-valeur réelle (37).

5. Procédé (1) selon la revendication 4, présentant en outre :
- l'arrêt (67) de l'intervention sur la dynamique de conduite (61) si l'écart valeur de consigne-valeur réelle (37) atteint ou dépasse par le bas une limite de tolérance de position (69).

6. Procédé (1) selon l'une des revendications 1 à 4, présentant en outre :
- l'arrêt (73) de l'intervention sur la dynamique de conduite (61) si l'écart d'angle de braquage (53) atteint ou dépasse par le bas une limite de stabilité (71).

7. Procédé (1) selon l'une des revendications 1 à 6, dans lequel la fourniture (55) d'une valeur de tolérance d'angle de braquage (57) pour l'écart d'angle de braquage (53) présente :
- la détermination (85) d'au moins une caractéristique géométrique (45) d'une configuration de véhicule actuelle (4) du véhicule (300) ;
- la détermination (87) d'au moins une caractéristique de charge (47) de la configuration de véhicule actuelle (4) ;
- la définition (89) de la valeur de tolérance d'angle de braquage (57) pour l'écart d'angle de braquage (53) à l'aide de la caractéristique géométrique (45) et de la caractéristique de charge (47).

8. Procédé (1) selon l'une des revendications 1 à 7, dans lequel l'intervention sur la dynamique de conduite (61) est une intervention de freinage (65) sur un ou plusieurs freins de roue du véhicule (300), une limitation de couple moteur (83) d'un moteur (314) du véhicule (300), une fourniture de couples d'entraînement asymétriques aux roues (318) du véhicule (300) et/ou une fourniture d'un couple de braquage d'assistance au moyen d'un essieu arrière pouvant être braqué du véhicule (300).

9. Procédé (1) selon l'une des revendications 1 à 8, présentant en outre :
- la détermination (103) d'une oscillation de braquage (105) à l'aide d'une évolution dans le temps de l'angle de braquage réel (9) ; et
en réponse à la détermination (103) d'une oscillation de braquage (105) :
- la réduction (109) de la valeur de tolérance d'angle de braquage (57) si une oscillation de braquage (105) qui se situe dans une bande de fréquences propres (107) du véhicule (300) est déterminée.

10. Procédé (1) selon l'une des revendications 1 à 9, présentant en outre :
- la détermination (117) d'un angle d'articulation réel (11) entre un véhicule tracteur (304) et un véhicule tracté (306) du véhicule (300) ;
- la détermination (119) d'un angle d'articulation de consigne (113) à l'aide de la trajectoire (3) ; et
- la réduction (111) de la valeur de tolérance d'angle de braquage (21) si l'angle d'articulation réel (11) dépasse par le haut, d'une valeur de tolérance d'angle d'articulation (115), l'angle d'articulation de consigne (113).

11. Système d'aide à la conduite (200) permettant d'améliorer une tenue de trajectoire d'un véhicule (300) dans une situation de conduite (15), présentant une unité de commande (202), dans lequel le système d'aide à la conduite (200) est configuré pour mettre en œuvre le procédé (1) selon l'une des revendications précédentes 1 à 10.

12. Véhicule (300), présentant au moins un actionneur de véhicule (310) et un système d'aide à la conduite (200) selon la revendication 11.

13. Produit-programme d'ordinateur comportant des moyens formant codes de programme qui sont stockés sur un support de données lisible par ordinateur et qui exécutent le procédé (1) selon l'une des revendications 1 à 10 lorsque le produit-programme d'ordinateur est exécuté sur une unité de calcul.
